# EUROPEAN PATENT SPECIFICATION

(11) **EP 3 920 566 B1**
(45) Date of publication and mention of the grant of the patent: **29.01.2025**
(21) Application number: 20755434.6
(22) Date of filing: 11.02.2020
(51) Int. Cl.: H04W 8/02, H04W 48/10, H04W 60/00

(54) **COMMUNICATION METHOD, TERMINAL DEVICE AND CORE NETWORK DEVICE**
KOMMUNIKATIONSVERFAHREN, ENDGERÄT UND NETZWERKVORRICHTUNG
PROCÉDÉ DE COMMUNICATION, DISPOSITIF TERMINAL ET DISPOSITIF DE RÉSEAU CENTRAL

(30) Priority: 15.02.2019 CN 201910118823
(43) Date of publication of application: 08.12.2021
(73) Proprietor: Huawei Technologies Co., Ltd., Shenzhen, Guangdong 518129 (CN)
(72) Inventor: YANG, Shuigen, Shenzhen, Guangdong 518129 (CN); JIN, Yinghao, Shenzhen, Guangdong 518129 (CN); HAN, Feng, Shenzhen, Guangdong 518129 (CN); TAN, Wei, Shenzhen, Guangdong 518129 (CN)
(74) Representative: Isarpatent
(86) International application number: PCT/CN2020/074722
(87) International publication number: WO 2020/164471

(56) References cited:
- EP-A1- 3 537 760
- WO-A1-2018/199672
- CN-A- 109 121 160
- CN-A- 109 219 111
- KR-A- 20180 049 796
- US-A1- 2019 029 065
- US-A1- 2019 029 065
- HUAWEI ET AL: "TS 23.502: Update of Registration Procedure", vol. SA WG2, no. Sophia Antipolis, France; 20170821 - 20170825, 29 August 2017 (2017-08-29), XP051335881, Retrieved from the Internet <URL:http://www.3gpp.org/ftp/tsg_sa/WG2_Arch/TSGS2_122BIS_Sophia_Antipolis/Docs/> [retrieved on 20170829]
- "3rd Generation Partnership Project; Technical Specification Group Services and System Aspects; System Architecture for the 5G System; Stage 2 (Release 16)", vol. SA WG2, 4 February 2019 (2019-02-04), XP051688561, Retrieved from the Internet <URL:http://www.3gpp.org/ftp/tsg%5Fsa/WG2%5FArch/Latest%5FSA2%5FSpecs/DRAFT%5FINTERIM/Archive/INTERIM%5FDRAFT%5F%28remove%5F862R3%5Femail%29%5F23501%2DnewRel%2D16%2BCRs%2Ezip> [retrieved on 20190204]
- CHINA TELECOM: "On Allowed NSSAI in NG-RAN", vol. RAN WG3, no. Sanya, China; 20180416 - 20180420, 15 April 2018 (2018-04-15), XP051430056, Retrieved from the Internet <URL:http://www.3gpp.org/ftp/Meetings%5F3GPP%5FSYNC/RAN3/Docs/> [retrieved on 20180415]
- ANONYMOUS: "3rd Generation Partnership Project; Technical Specification Group Core Network and Terminals; Non-Access-Stratum (NAS) protocol for 5G System (5GS); Stage 3 (Release 15)", 3GPP STANDARD; TECHNICAL SPECIFICATION; 3GPP TS 24.501, no. V15.2.1, 31 January 2019 (2019-01-31), pages 1 - 455, XP051591608
- INTEL: "Interim Conclusions on Network Slicing", SA WG2 MEETING #117 S2-165572, 11 October 2016 (2016-10-11), XP051169557, DOI: 20200430142419A

## Description

### TECHNICAL FIELD

This disclosure relates to the field of communications technologies, and the invention in particular, relates to a wireless communication method, a terminal device, and a core network device.

### BACKGROUND

A concept of a network slice is introduced into a 5th generation (5th Generation, 5G) communication system, and in a network slicing technology, one physical network can be divided into a plurality of virtual networks. A virtual network is considered as a "network slice", and network slices are independent of each other. Different sessions in one terminal device may need network slices corresponding to the sessions to provide a service. In actual application, the terminal device needs to send requested network slice information to a core network device, and the core network device feeds back allowed network slice information to the terminal device. If the network slice information requested by the terminal device is not in the allowed network slice information, the terminal device cannot use the requested network slice information. This manner limits a quantity or types of network slices that can be used by the terminal device in a coverage area of a current radio access network device, and also limits a type of a PDU session that can be established by the terminal device. Consequently, a requirement that the terminal device performs communication by using the network slice cannot be met.

In this case, how to better meet the requirement that the terminal device performs communication by using the network slice is a problem that needs to be solved.

HUAWEI ET AL: "TS 23.502:Update of Registration Procedure", 3GPP DRAFT; 821 76512 WAS S2-175654_TS 23.502 UPDATE OF REGISTRATION PROCEDURE, vol. SA WG2, no. Sophia Antipolis, France; 20170821 - 20170825 29 August 2017 (2017-08-29), discloses a registration procedure to clarify a CM state of performing mobility registration and the generation of an registration area. If during the registration procedure there are cases where a new registration area is allocated, an AMF will send the registration area to a UE via a registration Accept message. If there is no registration area included in the registration accept message, the UE shall consider the old registration area as valid.

CHINA TELECOM: "On Allowed NSSAI in NG-RAN", 3GPP DRAFT; R3-181891 CTC ON ALLOWED NSSAI IN NG-RAN, vol. RAI\ WG3, no. Sanya, China; 20180416 - 20180420 15 April 2018 (2018-04-15), discloses a necessity for an AMF to signal an allowed NSSAI to RAN to help UE cell reselection or handover to an appropriate cell.

US 20190029065 A1 discloses a network device which is configured to prevent the terminal device from using a specific network slice in cases where use of the specific network slice in a specific location/area/region is impossible or the use of a slice is possible only in a specific location/area/region regardless of whether to allow a slice in a PLMN.

EP 3537760 A1 discloses a UE which is configured to request a network slicing service to an application server to reselect a cell according to the priority of a specific network slice that is not supported in the neighbour cell in cases, where the UE determines an intended neighbour cell that does not support/allow one or more specific network slices.

### SUMMARY

The invention is set out in the appended set of claims. The object of the present invention is to provide a wireless communication method, a terminal device, and a core network device, to better meet a requirement that the terminal device performs communication by using a network slice. This object is solved by the independent claims and further embodiments and improvements of the present invention are listed in the dependent claims. Hereinafter, in the disclosure up to the "brief description of the drawings", "according to the invention" will be used to indicate features/streps of the independent claims and "according to an embodiment" or "embodiment" will be used to indicate embodiments of the invention. Whenever an "aspect", "implementation", "optionally" or similar is referred to, this designates features of embodiments of the invention, and "aspect of the invention" relates to the broadest embodiment as claimed in the independent claims.

According to a first aspect, according to the invention, the invention provides a communication method, including:

A terminal device sends, through a radio access network device, a registration request message including first network slice information to a core network device. The first network slice information is information about a first network slice corresponding to a PDU session that the terminal device expects to establish. The terminal device receives, through the radio access network device, a registration receiving message sent by the core network device, where the registration receiving message includes information about a first registration area allocated to the terminal device and second network slice information, the second network slice information is information about a second network slice that is allowed to be used by the terminal device in the first registration area, and the second network slice information includes the first network slice information. Here, the first registration area comprises at least one tracking area, and each of the at least one tracking area supports the first network slice.

In the first aspect, the terminal device may send, to the core network device, information about a network slice corresponding to the PDU session that is expected to be established. The core network device may reallocate an RA to the terminal device based on the information about the network slice corresponding to the PDU session that the terminal device expects to establish. In addition, the reallocated RA can support network slices corresponding to all sessions that the terminal device expects to establish. In this way, a quantity or types of network slices that can be used by the terminal device in a coverage area of a current radio access network device is/are expanded, and a type of a PDU session that can be established by the terminal device is also increased, thereby meeting, to a greater extent, a requirement that the terminal device performs communication by using the network slice.

Optionally, names of the registration request message and the registration receiving message are not limited in this application.

With reference to the first aspect, in a possible implementation, not claimed, the registration request message includes fourth network slice information, and the fourth network slice information is requested NSSAI. The requested NSSAI is used to indicate a fourth network slice provided by the terminal device to a serving public land mobile network in a registration process. The first network slice is a subset or a complete set of the fourth network slice. For example, the fourth network slice includes a network slice 1, a network slice 2, and a network slice 3, and the first network slice may be the network slice 2. The registration request message needs to carry the fourth network slice information and the first network slice information.

With reference to the first aspect, in a possible implementation, the registration request message further includes slice availability information, and the slice availability information includes information about whether the first network slice is available in a tracking area included in a historically allocated second registration area. After the slice availability information is sent to the core network device, the core network device may allocate the first RA to the terminal device based on the slice availability information, so that the terminal device may use the first network slice in the first RA.

With reference to the first aspect, in a possible implementation, the first network slice is a network slice that is supported by the radio access network device and that corresponds to the PDU session that the terminal device expects to establish. In this way, expected first network slice information is more easily included in second network slice information allowed by the core network device, and the terminal device does not need to include, in the registration request message, information about a network slice that is not supported by the radio access network device, thereby reducing transmission overheads caused because the terminal device includes, in the registration request message, the information that is not supported by the radio access network device.

With reference to the first aspect, in a possible implementation, before the terminal device sends the registration request message to the core network device, the method further includes obtaining third network slice information of a third network slice supported by the radio access network device. A specific implementation process may be: The terminal device sends a first message to the radio access network device, where the first message is used to obtain third network slice information of the third network slice supported by the radio access network device. The terminal device receives a second message sent by the radio access network device, where the second message includes the third network slice information.

Optionally, not claimed, the first message is a radio resource control RRC system information request message, the second message is a system information message, and the system information message includes the third network slice information. In this case, optionally, the first message may carry a requested system information block identifier, the requested system information block identifier is used to obtain the third network slice information, and the requested system information block identifier is used to indicate information obtained through the first message. Alternatively, optionally, the first message may carry first indication information, the first indication information is used to obtain the third network slice information of the third network slice supported by the radio access network device, and the first indication information is used to indicate information obtained through the first message.

Optionally, not claimed, the first message is a random access preamble message, and the second message is a system information message. In this case, optionally, the first message may carry a requested system information block identifier, the requested system information block identifier is used to obtain the third network slice information, and the requested system information block identifier is used to indicate information obtained through the first message. Alternatively, optionally, the first message may carry second indication information, the second indication information is used to obtain the third network slice information of the third network slice supported by the radio access network device, and the second indication information is used to indicate information obtained through the first message.

Optionally, not claimed, the first message is a radio resource control RRC request message, and the second message is an RRC response message. In this case, optionally, the first message may carry third indication information, the third indication information is used to obtain the third network slice information of the third network slice supported by the radio access network device, and the third indication information is used to indicate information obtained through the first message.

With reference to the first aspect, not claimed, in a possible implementation, the first network slice information includes at least one piece of single network slice selection assistance information S-NSSAI.

According to a second aspect, according to the invention, provides a communication method, including:

A core network device receives, through a radio access network device, a registration request message that is sent by a terminal device and that includes first network slice information. The first network slice information is information about a first network slice corresponding to a PDU session that the terminal device expects to establish. The core network device allocates a first registration area to the terminal device based on the registration request message, where the first registration area supports at least a second network slice, and the second network slice is a network slice that is allowed to be used by the terminal device in the first registration area. The core network device sends a registration receiving message to the terminal device through the radio access network device, where the registration receiving message includes information about the first registration area and second network slice information of the second network slice, and the second network slice information includes the first network slice information.

In the second aspect, the core network device may reallocate an RA to the terminal device based on information about a network slice corresponding to the PDU session that the terminal device expects to establish. In addition, the reallocated RA can support network slices corresponding to all sessions that the terminal device expects to establish. In this way, a quantity or types of network slices that can be used by the terminal device in a coverage area of a current radio access network device is/are expanded, and a type of a PDU session that can be established by the terminal device is also increased, thereby meeting, to a greater extent, a requirement that the terminal device performs communication by using the network slice.

With reference to the second aspect, according to the invention, the first registration area includes at least one tracking area, each of the at least one tracking area supports the first network slice, and the at least one tracking area of the first registration area is determined, based on a network slice supported by each of a plurality of tracking areas and the first network slice information.

With reference to the second aspect, in a possible implementation, the registration request message further includes slice availability information, and the slice availability information includes information about whether the first network slice is available in a tracking area included in a historically allocated second registration area. The core network device may allocate the first RA to the terminal device based on the slice availability information, so that the terminal device may use the first network slice in the first RA.

With reference to the second aspect, not claimed, in a possible implementation, the first registration area includes at least one tracking area, each of the at least one tracking area supports the first network slice, and the at least one tracking area is determined based on the slice availability information and the first network slice information.

With reference to the second aspect, not claimed, in a possible implementation, the first network slice is a network slice that is supported by the radio access network device and that corresponds to the PDU session that the terminal device expects to establish. In this way, expected first network slice information is more easily included in second network slice information allowed by the core network device, and the terminal device does not need to include, in the registration request message, information about a network slice that is not supported by the radio access network device, thereby reducing transmission overheads caused because the terminal device includes, in the registration request message, the information that is not supported by the radio access network device.

With reference to the second aspect, not claimed, in a possible implementation, the first network slice information includes at least one piece of single network slice selection assistance information S-NSSAI.

According to a third aspect, not claimed, an embodiment of this application provides a communication method, including:

A terminal device sends a first message to a radio access network device, where the first message is used to obtain third network slice information of a third network slice supported by the radio access network device. The terminal device receives a second message sent by the radio access network device, where the second message includes the third network slice information.

Optionally, the first message is a radio resource control RRC system information request message, the second message is a system information message, and the system information message includes the third network slice information. In this case, optionally, the first message may carry a requested system information block identifier, the requested system information block identifier is used to obtain the third network slice information, and the requested system information block identifier is used to indicate information obtained through the first message. Alternatively, optionally, the first message may carry first indication information, the first indication information is used to obtain the third network slice information of the third network slice supported by the radio access network device, and the first indication information is used to indicate information obtained through the first message.

Optionally, the first message is a random access preamble message, and the second message is a system information message. In this case, optionally, the first message may carry a requested system information block identifier, the requested system information block identifier is used to obtain the third network slice information, and the requested system information block identifier is used to indicate information obtained through the first message. Alternatively, optionally, the first message may carry second indication information, the second indication information is used to obtain the third network slice information of the third network slice supported by the radio access network device, and the second indication information is used to indicate information obtained through the first message.

Optionally, the first message is a radio resource control RRC request message, and the second message is an RRC response message. In this case, optionally, the first message may carry third indication information, the third indication information is used to obtain the third network slice information of the third network slice supported by the radio access network device, and the third indication information is used to indicate information obtained through the first message.

In the third aspect, the first message or the second message may be a message existing in a current standard, and the existing message is used to implement a solution in the third aspect. Alternatively, the first message or the second message may be a new message.

Optionally, the terminal device may further perform a registration procedure. Specifically, the terminal device needs to perform the registration procedure in several cases. For example, in a mobility registration update scenario, the terminal device performs the registration procedure; in a periodic registration update scenario, the terminal device performs the registration procedure; in an emergency registration update scenario, the terminal device performs the registration procedure. For a specific implementation process of performing the registration procedure, refer to the specific descriptions of the first aspect and the second aspect.

In the third aspect, the terminal device may obtain the third network slice information of the third network slice supported by the radio access network device, so that the terminal device determines, in a coverage area of a current radio access network device, a quantity or types of network slices supported by the radio access network device.

According to a fourth aspect, not claimed, an embodiment of this application provides a communication method, including:

A radio access network device receives a first message sent by a terminal device, where the first message is used to obtain third network slice information of a third network slice supported by the radio access network device. The radio access network device sends a second message to the terminal device, where the second message includes the third network slice information.

Optionally, the first message is a radio resource control RRC system information request message, the second message is a system information message, and the system information message includes the third network slice information. In this case, optionally, the first message may carry a requested system information block identifier, the requested system information block identifier is used to obtain the third network slice information, and the requested system information block identifier is used to indicate information obtained through the first message. Alternatively, optionally, the first message may carry first indication information, the first indication information is used to obtain the third network slice information of the third network slice supported by the radio access network device, and the first indication information is used to indicate information obtained through the first message.

Optionally, the first message is a random access preamble message, and the second message is a system information message. In this case, optionally, the first message may carry a requested system information block identifier, the requested system information block identifier is used to obtain the third network slice information, and the requested system information block identifier is used to indicate information obtained through the first message. Alternatively, optionally, the first message may carry second indication information, the second indication information is used to obtain the third network slice information of the third network slice supported by the radio access network device, and the second indication information is used to indicate information obtained through the first message.

Optionally, the first message is a radio resource control RRC request message, and the second message is an RRC response message. In this case, optionally, the first message may carry third indication information, the third indication information is used to obtain the third network slice information of the third network slice supported by the radio access network device, and the third indication information is used to indicate information obtained through the first message.

In the fourth aspect, the radio access network device may send the third network slice information of the third network slice to the terminal device, so that the terminal device determines, in a coverage area of a current radio access network device, a quantity or types of network slices supported by the radio access network device.

According to a fifth aspect, according to the invention, provides a terminal device, including:
a sending module, configured to send a registration request message to a core network device through a radio access network device, where the registration request message includes first network slice information, and the first network slice information is information about a first network slice corresponding to a PDU session that the terminal device expects to establish; and
a receiving module, configured to receive, through the radio access network device, a registration receiving message sent by the core network device, where the registration receiving message includes information about a first registration area allocated to the terminal device and second network slice information, the second network slice information is information about a second network slice that is allowed to be used by the terminal device in the first registration area wherein the first registration area comprises at least one tracking area, and each of the at least one tracking area supports the first network slice, and
the second network slice information includes the first network slice information.

Optionally, the terminal device may further implement the method performed in any one of the first aspect and the possible implementations of the first aspect.

According to a sixth aspect, according to the invention, provides a core network device, including:
a receiving module, configured to receive a registration request message sent by a terminal device, where the registration request message includes first network slice information, and the first network slice information is information about a first network slice corresponding to a PDU session that the terminal device expects to establish;
a processing module, configured to allocate a first registration area to the terminal device based on the registration request message, where the first registration area supports at least a second network slice, and the second network slice is a network slice that is allowed to be used by the terminal device in the first registration area, wherein the first registration area comprises at least one tracking area, and each of the at least one tracking area supports the first network slice; and
a sending module, configured to send a registration receiving message to the terminal device, where the registration receiving message includes information about the first registration area and second network slice information of the second network slice, and
the second network slice information includes the first network slice information.

Optionally, the core network device may further implement the method performed in any one of the second aspect and the possible implementations of the second aspect.

According to a seventh aspect, not claimed, an embodiment of this application provides a terminal device, including:
a sending module, configured to send a first message to a radio access network device, where the first message is used to obtain third network slice information of a third network slice supported by the radio access network device; and
a receiving module, configured to receive a second message sent by the radio access network device, where the second message includes the third network slice information.

Optionally, the terminal device may further implement the method performed in any one of the third aspect and the possible implementations of the third aspect.

According to an eighth aspect, not claimed, an embodiment of this application provides a radio access network device, including:
a receiving module 1101, configured to receive a first message sent by a terminal device, where the first message is used to obtain third network slice information of a third network slice supported by a radio access network device; and
a sending module 1102, configured to send a second message to the terminal device, where the second message includes the third network slice information.

Optionally, the radio access network device may further implement the method performed in any one of the fourth aspect and the possible implementations of the fourth aspect.

According to a ninth aspect, not claimed, an embodiment of this application provides a communication apparatus. The communication apparatus may be the terminal device in the foregoing device designs, or may be a chip disposed in the terminal device. The communication apparatus includes: a processor, a memory, and a transceiver.

The transceiver is configured to receive and send a message.

The memory is configured to store instructions.

The processor is configured to execute the instructions stored in the memory. When the processor executes the instructions stored in the memory, the communication apparatus is enabled to perform the method performed in any one of the first aspect, the third aspect, and the possible implementations of the first aspect and the third aspect.

According to a tenth aspect, not claimed, an embodiment of this application provides a communication apparatus. The communication apparatus may be the core network device in the foregoing device designs, or may be a chip disposed in the core network device. The communication apparatus includes: a processor, a memory, and a transceiver.

The transceiver is configured to receive and send a message.

The memory is configured to store instructions.

The processor is configured to execute the instructions stored in the memory. When the processor executes the instructions stored in the memory, the communication apparatus is enabled to perform the method performed in any one of the second aspect and the possible implementations of the second aspect.

According to an eleventh aspect, not claimed, an embodiment of this application provides a communication apparatus. The communication apparatus may be the radio access network device in the foregoing device designs, or may be a chip disposed in the radio access network device. The communication apparatus includes: a processor, a memory, and a transceiver.

The transceiver is configured to receive and send a message.

The memory is configured to store instructions.

The processor is configured to execute the instructions stored in the memory. When the processor executes the instructions stored in the memory, the communication apparatus is enabled to perform the method performed in any one of the fourth aspect and the possible implementations of the fourth aspect.

According to a twelfth aspect, not claimed, an embodiment of this application provides a computer program product. The computer program product includes: computer program code. When the computer program code is run on a computer, the computer is enabled to perform the method in any one of the first aspect, the third aspect, and the possible implementations of the first aspect and the third aspect.

According to a thirteenth aspect, not claimed, an embodiment of this application provides a computer program product. The computer program product includes: computer program code. When the computer program code is run on a computer, the computer is enabled to perform the method in any one of the second aspect and the possible implementations of the second aspect.

According to a fourteenth aspect, not claimed, an embodiment of this application provides a computer program product. The computer program product includes: computer program code. When the computer program code is run on a computer, the computer is enabled to perform the method in any one of the fourth aspect and the possible implementations of the fourth aspect.

According to a fifteenth aspect, an embodiment of this application provides a readable storage medium. The readable storage medium is configured to store instructions, to implement any one of the first aspect, the third aspect, and the possible implementations of the first aspect and the third aspect.

According to a sixteenth aspect, an embodiment of this application provides a readable storage medium. The readable storage medium is configured to store instructions, to implement any one of the second aspect and the possible implementations of the second aspect.

According to a seventeenth aspect, not claimed, an embodiment of this application provides a readable storage medium. The readable storage medium is configured to store instructions, to implement any one of the fourth aspect and the possible implementations of the fourth aspect.

### BRIEF DESCRIPTION OF DRAWINGS

To describe technical solutions in embodiments of this application more clearly, the following describes the accompanying drawings used in the embodiments of this application.
FIG. 1 is a possible schematic architectural diagram of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic structural diagram of a terminal device according to an embodiment of this application;
FIG. 8 is a schematic structural diagram of another terminal device according to an embodiment of this application;
FIG. 9 is a schematic structural diagram of a core network device according to an embodiment of this application;
FIG. 10 is a schematic structural diagram of another core network device according to an embodiment of this application;
FIG. 11 is a schematic structural diagram of a radio access network device according to an embodiment of this application; and
FIG. 12 is a schematic structural diagram of another radio access network device according to an embodiment of this application.

### DESCRIPTION OF EMBODIMENTS

The following describes embodiments of this application with reference to the accompanying drawings in the embodiments of this application.

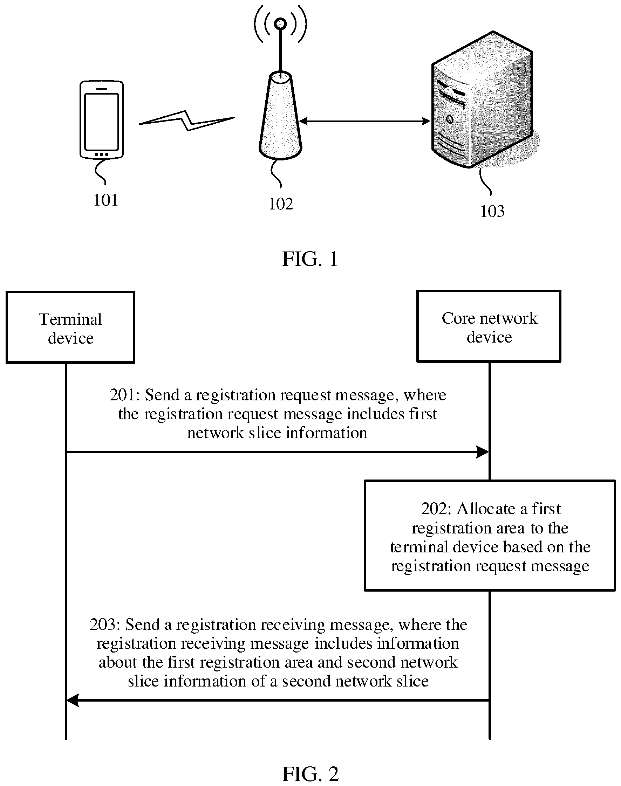

FIG. 1 is a possible schematic architectural diagram of a communication system according to an embodiment of this application. The communication system includes a terminal device 101, a radio access network device 102, and a core network device 103. The terminal device 101 and the radio access network device 102 communicate with each other by using an air interface technology, and there is a communication interface between the core network device 103 and the radio access network device 102. For example, the communication interface is an NG interface.

A network slice (network slice) in this application is a logical network that provides specific network capabilities and network characteristics (a logic network that provides specific network capabilities and network characteristics). The network slices are logical networks having different network capabilities and network characteristics that are customized on a physical or virtual network infrastructure based on different service requirements, tenants, or the like. The network slice includes a group of network capabilities and resources (for example, a computing resource, a storage resource, and a network resource) required for the network capabilities.

There are a plurality of types of services in the terminal device 101, for example, an enhanced mobile broadband service (enhanced mobile broadband, eMBB), ultra-reliable low-latency communication (ultra-reliable low latency communications, URLLC), and massive machine-type communications (massive machine type communication, mMTC). Different types of service sessions may correspond to different network slices. Because provided operators or service providers are different, even a same service type may also correspond to different network slices.

In this way, in a case in which the terminal device 101 needs to establish a plurality of protocol data unit (protocol data unit, PDU) sessions, the terminal device 101 needs to register with the network slice. A specific process is as follows:
(1) The terminal device 101 provides requested network slice selection assistance information (requested network slice selection assistance information, Requested NSSAI) to the core network device 103. The requested NSSAI is used to indicate NSSAI provided by the terminal device 101 to a serving public land mobile network in a registration process. For example, the requested NSSAI is NSSAI that is determined when the terminal device 101 performs subscription and that is supported by the terminal device 101. The requested NSSAI includes one piece or a plurality of pieces of single network slice selection assistance information (single network slice selection assistance information, S-NSSAI), and one piece of S-NSSAI may be used to identify one network slice.
(2) The core network device 103 determines allowed network slice selection assistance information (allowed network slice selection assistance information, Allowed NSSAI) of the terminal device 101, and sends the allowed NSSAI to the terminal device 101. The allowed NSSAI is used to indicate S-NSSAI that can be used by the terminal device 101 in all tracking areas in a current registration area. The allowed NSSAI includes at least one piece of S-NSSAI included in the requested NSSAI.

The tracking area (tracking area, TA) is a basic unit of location management in a communication system, and includes one or more cells. The cell is an area covered by a radio access network device or a part of an area covered by a radio access network device, and the TA may include cells included in a plurality of radio access network devices. When the terminal device 101 in an idle state needs to be paged, a paging message is used for paging by using the TA as a unit, and a paging message for one terminal device 101 is sent in all the cells in the TA. One cell can belong to only one TA.

A registration area (registered area, RA) includes one or more TAs. For example, when moving in different TAs in a same RA, the terminal device 101 does not need to perform mobility registration update. The mobility registration update needs to be performed only when the terminal device 101 moves to a new TA and the new TA is determined not to belong to the RA.

In a process in which the core network device 103 determines the allowed NSSAI of the terminal device 101, the core network device 103 may query, from a network management system, an available network slice in each TA included in a current RA allocated to the terminal device, and determine, with reference to requested NSSAI that is included in a registration request message by the terminal device 101, the allowed NSSAI of the terminal device 101 in the current RA. The network management system is an operation, administration and maintenance (operation administration and maintenance, OAM) system.

In a case in which the requested NSSAI includes a plurality of pieces of S-NSSAI, and the allowed NSSAI sent by the core network device 103 includes one part of the S-NSSAI in the requested NSSAI, the other part of the S-NSSAI included in the requested NSSAI of the terminal device 101 is not in the allowed NSSAI. In this way, even if the terminal device 101 is in a coverage area that supports using the other part of the S-NSSAI, the terminal device 101 is not allowed to use the another part of the S-NSSAI.

For example, refer to Table 1. A network slice included in the requested NSSAI is provided. The current registration area includes three TAs: a TA 1, a TA 2 and a TA 3, and an available network slice in each TA. Finally, the allowed NSSAI sent by the core network device 103 includes only S-NSSAI 3. In this case, even when the terminal device 101 is within an area range in which S-NSSAI 1 can be used (for example, when the terminal device 101 is located in the TA 1), a network does not allow the terminal device 101 to use the S-NSSAI 1, so that the terminal device 101 cannot establish a PDU session (PDU session) of the S-NSSAI 1. This manner limits a quantity or types of network slices that can be used by the terminal device 101 in a coverage area of a current radio access network device, and also limits a type of a PDU session that can be established by the terminal device 101. Consequently, a requirement that the terminal device 101 performs communication by using the network slice cannot be met.

**Table 1**

| Requested NSSAI | | S-NSSAI 1, S-NSSAI 2, S-NSSAI 3, S-NSSAI 4, and S-NSSAI 5 |
|---|---|---|
| RA | TA 1 | S-NSSAI 1, S-NSSAI 2, and S-NSSAI 3 |
| | TA 2 | S-NSSAI 2, S-NSSAI 3, and S-NSSAI 4 |
| | TA 3 | S-NSSAI 3, S-NSSAI 4, and S-NSSAI 5 |
| Allowed NSSAI | | S-NSSAI 3 |

In this application, a terminal device may send, to a core network device, information about a network slice corresponding to a PDU session that is expected to be established. The core network device may reallocate an RA to the terminal device based on the information about the network slice corresponding to the PDU session that the terminal device expects to establish. In addition, the reallocated RA can support network slices corresponding to all sessions that the terminal device expects to establish. In this way, a quantity or types of network slices that can be used by the terminal device in a coverage area of a current radio access network device is/are expanded, and a type of a PDU session that can be established by the terminal device is also increased, thereby meeting, to a greater extent, a requirement that the terminal device performs communication by using the network slice.

The following describes network elements in FIG. 1 and this embodiment of this application.

The terminal device 101 may be user equipment (user equipment, UE), and the UE accesses a network side through the radio access network device 102. For example, the UE may be a handheld terminal device 101, a notebook computer, a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, or another device that can access a network.

The radio access network (radio access network, RAN) device 102 is mainly responsible for functions such as radio resource management, quality of service (quality of service, QoS) management, and data compression and encryption on an air interface side. The radio access network device 102 may include base stations in various forms, such as a macro base station, a micro base station (which is also referred to as a small cell), a relay station, and an access point. In systems that use different radio access technologies, names of a device that has a base station function may be different. For example, in a 5G system, the device is referred to as a gNB, or a next-generation evolved NodeB (ng-eNB). In a long term evolution (long term evolution, LTE) system, the device is referred to as an evolved NodeB (evolved nodeB, eNB, or eNodeB). In a 3rd generation (3rd generation, 3G) system, the device is referred to as a NodeB (node B).

The core network device 103 may be an access and mobility management function (Access and Mobility Management Function, AMF), and is mainly responsible for functions such as access control, mobility management (mobility management, MM), attachment and detachment, and gateway selection. The core network device 103 in this embodiment of this application is not limited to the AMF.

It should be noted that, in an optional manner, information about the network slice supported by the radio access network device in any one of the embodiments of this application may include an identifier of at least one first TA and at least one piece of network slice information corresponding to an identifier of each first TA. For example, a specific representation form is as follows: (A name is merely an example, and is not limited in this embodiment of this application) The identifier of the first TA may be represented by using a tracking area identity (tracking area identity, TAI) or a tracking area code (tracking area code, TAC), and an S-NSSAI list represents at least one piece of network slice information. One TAI or TAC may correspond to at least one S-NSSAI list.
> > > TAI or TAC
>>> S-NSSAI list

One radio access network device may include one or more cells, each cell is allocated to one TA, and one cell can be allocated to only one TA. The at least one first TA herein is used to indicate TAs to which all the cells included in the radio access network device are allocated. Each first TA may support one or more network slices. In this way, one identifier of the first TA may correspond to at least one piece of network slice information.

It should be further noted that, one piece of network slice information in any one of the embodiments of this application includes one or more pieces of S-NSSAI. The S-NSSAI includes at least slice/service type (slice/service type, SST) information, and optionally, may further include slice differentiator (slice differentiator, SD) information. The SST information is used to indicate behavior of a network slice, such as a feature and a service type of the network slice. The SD information is supplement information of an SST. If the SST points to a plurality of network slice instances, an SD may correspond to one unique network slice instance.

It should be understood that, in this embodiment of this application, the network slice information may be represented by using a network slice type. Alternatively, the network slice information may be represented by using a network slice type and a service type. Alternatively, the network slice information may be represented by using a service type and tenant information, or the like. This is not limited in this embodiment of this application. Optionally, a specific coding form of the network slice information is not limited. Different fields that can be carried in an interface message between different devices represents different network slice information. Alternatively, an abstracted index value can be used for replacement, and different index values correspond to different network slices. Certainly, in addition to the foregoing identifiers, another identifier may also be used. This is not limited herein.

This embodiment of this application may be applied to another communication system that supports a network slice, for example, a 5G communication system. The terms "system" and "network" can be interchanged with each other. The system architecture described in this embodiment of this application is intended to describe the technical solutions in the embodiments of this application more clearly, and does not constitute a limitation on the technical solutions provided in the embodiments of this application. A person of ordinary skill in the art may know that, as a network architecture evolves, the technical solutions provided in the embodiments of this application are also applicable to a similar technical problem.

The following describes an embodiment of this application.

Based on the communication system shown in FIG. 1, FIG. 2 is a schematic flowchart of a communication method according to this application. The method shown in FIG. 2 includes step 201 to step 203.

201: A terminal device sends a registration request message to a core network device through a radio access network device. The registration request message includes first network slice information.

Correspondingly, the core network device receives the registration request message through the radio access network device. The registration request message herein may alternatively have another name. This is not limited in this embodiment of this application.

The registration request message includes fourth network slice information, and the fourth network slice information is requested NSSAI. The requested NSSAI is used to indicate a fourth network slice provided by the terminal device to a serving public land mobile network in a registration process. For example, the requested NSSAI is NSSAI that is determined when the terminal device performs subscription and that is supported by the terminal device. The requested NSSAI includes at least one piece of S-NSSAI.

The first network slice information further included in the registration request message is information about a first network slice corresponding to a PDU session that the terminal device expects to establish. For example, that the first network slice information is preferred NSSAI specifically means that NSSAI provided to the serving public land mobile network is used to indicate S-NSSAI used by the PDU session that the terminal device expects to establish (NSSAI provided by the UE to the Serving PLMN, indicating the S-NSSAI values in which the UE wants to establish a PDU session). The first network slice information includes at least one piece of S-NSSAI.

The first network slice is a subset or a complete set of the fourth network slice. For example, the fourth network slice includes a network slice 1, a network slice 2, and a network slice 3, and the first network slice may be the network slice 2. The registration request message in step 201 needs to carry the fourth network slice information and the first network slice information.

Optionally, the registration request message further includes slice availability information. The slice availability information includes information about whether the first network slice is available in a TA included in a historically allocated second RA. The second RA herein may be one or more historically allocated second RAs, and the included TA is also a TA included in the one or more second RAs. After the slice availability information is sent to the core network device, the core network device may allocate a first RA to the terminal device based on the slice availability information, so that the terminal device may use the first network slice in the first RA.

For example, the fourth network slice includes the network slice 1, the network slice 2, the network slice 3, a network slice 4, and a network slice 5. The first network slice includes the network slice 2, the network slice 3, and the network slice 4. For the first network slice information and the slice availability information that are included in the registration request message, refer to Table 2.

**Table 2**

| First network slice | TA 11 | TA 12 | TA 13 | TA 14 | TA 15 | TA 16 |
|---|---|---|---|---|---|---|
| Network slice 2 | Unavailable | Available | Unavailable | Available | Available | Unavailable |
| Network slice 3 | Unavailable | Available | Unavailable | Available | Available | Available |
| Network slice 4 | Available | Available | Available | Available | Available | Available |

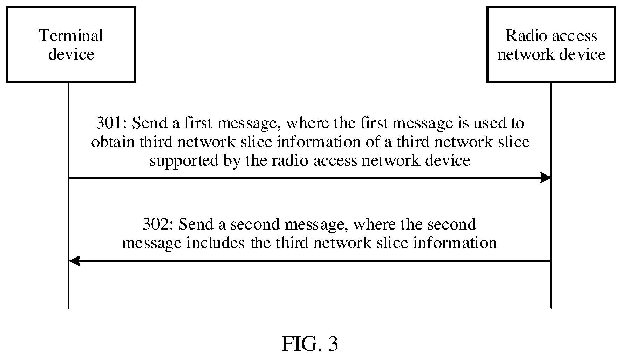

Further, in the foregoing possible implementation, the first network slice is not only a network slice corresponding to the PDU session that the terminal device expects to establish, but also a network slice supported by the radio access network device. For example, the network slice corresponding to the PDU session that the terminal device expects to establish includes the network slice 2, the network slice 3, and the network slice 4. The terminal device determines that a network slice supported by a currently accessed radio access network device includes the network slice 3 and the network slice 4. Therefore, the first network slice included in the registration request message by the terminal device is the network slice 3 and the network slice 4. In this way, expected first network slice information is more easily included in second network slice information allowed by the core network device, and the terminal device does not need to include, in the registration request message, information about a network slice that is not supported by the radio access network device, thereby reducing transmission overheads caused because the terminal device includes, in the registration request message, the information that is not supported by the radio access network device. For details that the terminal device obtains third network slice information of a third network slice supported by the radio access network device, refer to specific descriptions in the embodiments shown in FIG. 3 to FIG. 6.

It should be noted that the registration request message in this embodiment of this application is sent by the terminal device in a mobility registration update scenario. For example, when the terminal device in a connected state or an idle state is handed over to a new TA that does not belong to a current RA, or when the terminal device needs to update a capability or a protocol parameter negotiated in a registration process, or when the terminal device expects to obtain information about a local area data network, the terminal device initiates a mobility registration update procedure. Alternatively, the registration request message is sent by the terminal device in a periodic registration update scenario. For example, the terminal device sends a periodic registration request message at a preset time interval. Alternatively, the registration request message is sent by the terminal device in an emergency registration update scenario.

202: The core network device allocates the first registration area to the terminal device based on the registration request message.

The first RA allocated by the core network device supports at least a second network slice, and the second network slice is a network slice that is allowed to be accessed by the terminal device in the first RA.

In a first possible implementation, the registration request message includes the first network slice information. A specific manner in which the core network device performs step 202 is as follows: The core network device queries a fifth network slice supported by each of a plurality of TAs. The core network device determines, from the plurality of TAs, a TA that supports the first network slice, and forms the first RA by using the TA that supports the first network slice.

For example, the plurality of TAs queried by the core network device include eight TAs. For fifth network slices respectively supported by the eight TAs, refer to Table 3. The first network slice includes the network slice 2, the network slice 3, and the network slice 4. It can be learned that TAs that support the first network slice include: a TA 22, a TA 23, a TA 26, and a TA 28. The core network device forms the first RA by using the TA 22, the TA 23, the TA 26, and the TA 28 that support the first network slice.

**Table 3**

| A plurality of TAs | Supported fifth network slice |
|---|---|
| TA 21 | Network slice 1, network slice 3, network slice 4, network slice 5, and network slice 6 |
| TA 22 | Network slice 1, network slice 2, network slice 3, and network slice 4 |
| TA 23 | Network slice 1, network slice 2, network slice 3, network slice 4, and network slice 5 |
| TA 24 | Network slice 3, network slice 4, network slice 5, and network slice 6 |
| TA 25 | Network slice 2, network slice 3, network slice 5, and network slice 6 |
| TA 26 | Network slice 2, network slice 3, network slice 4, and network slice 6 |
| TA 27 | Network slice 1, network slice 3, network slice 5, and network slice 6 |
| TA 28 | Network slice 2, network slice 3, network slice 4, and network slice 5 |

In a second possible implementation, the registration request message includes the first network slice information and the slice availability information. In one case, the core network device may determine, based only on the first network slice information carried in the registration request message and according to the first possible implementation solution, the first RA allocated to the terminal device. In another case, a specific implementation in which the core network device performs step 202 is as follows: The core network device determines a plurality of TAs from the registration request message, and the plurality of TAs are TAs included in a second RA historically allocated to the terminal device. The core network device determines, from the plurality of TAs, a TA that supports the first network slice, and forms the first RA by using the TA that supports the first network slice.

For example, Table 2 is used as an example. For the first network slice information and the slice availability information that are included in the registration request message received by the core network device, refer to Table 2. The plurality of TAs determined by the core network device include a TA 11, a TA 12, a TA 13, a TA 14, a TA 15, and a TA 16. The first network slice includes the network slice 2, the network slice 3, and the network slice 4. It can be learned that TAs that support the first network slice include: the TA 12, the TA 14, and the TA 15. The core network device forms the first RA by using the TA 12, the TA 14, and the TA 15 that support the first network slice.

A quantity of the plurality of TAs in the foregoing examples is merely an example for description. The quantity of the TAs queried by the core network device is not limited in this application. Optionally, the core network device may query, from OAM, a TA and a network slice that can be used in the TA.

203: The core network device sends a registration receiving message to the terminal device through the radio access network device, where the registration receiving message includes information about the first RA and second network slice information of the second network slice.

Correspondingly, the terminal device receives, through the radio access network device, the registration receiving message sent by the core network device. The registration receiving message herein may alternatively have another name. This is not limited in this embodiment of this application.

The registration receiving message includes the information about the first RA allocated to the terminal device and the second network slice information, and the second network slice information is information about the second network slice that is allowed to be accessed by the terminal device in the first RA.

Optionally, the first RA includes at least one TA, and the information about the first RA may be an identifier of an RA and an identifier of each of a plurality of TAs included in the first RA.

Optionally, the second network slice information includes at least the first network slice information. In this way, the core network device can allow all the first network slices, expected by the terminal device, to be used, thereby meeting a requirement of the terminal device to a greater extent. In addition, the second network slice information may further include information about another network slice in the fourth network slice supported by the first RA, so that the terminal device may directly use the another network slice in a case in which the terminal device needs to use the another network slice, thereby saving time of the terminal device requesting to use the another network slice.

It should be noted that, in this embodiment of this application, the terminal device communicates with the core network device through the radio access network device. For example, a specific implementation of step 201 is as follows: The terminal device sends the registration request message to the radio access network device, and the radio access network device sends the registration request message to the core network device. Optionally, the registration request message sent by the terminal device to the radio access network device may be different from the registration request message sent by the radio access network device to the core network device in terms of message names, but the sent message includes at least the first network slice information.

Similarly, the core network device also communicates with the terminal device through the radio access network device. For example, a specific implementation of step 203 is as follows: The core network device sends the registration receiving message to the radio access network device, and the radio access network device sends the registration receiving message to the terminal device. Optionally, the registration receiving message sent by the core network device to the radio access network device may be different from the registration receiving message sent by the radio access network device to the terminal device in terms of message names, but the sent message includes at least the information about the first RA and the second network slice information.

It should be further noted that the radio access network device through which the terminal device obtains the third network slice information is the same as the radio access network device through which the terminal device communicates with the core network device.

In this embodiment of this application, the terminal device may send, to the core network device, information about the network slice corresponding to the PDU session that is expected to be established. The core network device may reallocate an RA to the terminal device based on the information about the network slice corresponding to the PDU session that the terminal device expects to establish. In addition, the reallocated RA can support network slices corresponding to all sessions that the terminal device expects to establish. In this way, a quantity or types of network slices that can be used by the terminal device in a coverage area of a current radio access network device is/are expanded, and a type of a PDU session that can be established by the terminal device is also increased, thereby meeting, to a greater extent, a requirement that the terminal device performs communication by using the network slice.

In any one of the following embodiments shown in FIG. 3 to FIG. 6, the terminal device may obtain the third network slice information of the third network slice supported by the radio access network device. FIG. 3 is a possible schematic flowchart of a communication method according to an embodiment of this application. As shown in FIG. 3, the method includes step 301 and step 302.

301: A terminal device sends a first message to the radio access network device.

Correspondingly, the radio access network device receives the first message.

The first message is used to obtain third network slice information of a third network slice supported by the radio access network device.

Optionally, the first message may carry indication information, the indication information is used to obtain the third network slice information of the third network slice supported by the radio access network device, and the indication information is used to indicate information obtained through the first message. For example, the first message carries an information element (information element, IE). When a bit value of the information element is "1", it indicates that the information element is used to obtain the third network slice information, so that the radio access network device feeds back the third network slice information. A quantity of bits occupied by the first indication information is not limited in this embodiment of this application.

Alternatively, optionally, the first message may carry a requested system information block identifier, the requested system information block identifier is used to obtain the third network slice information, and the requested system information block identifier is used to indicate information obtained through the first message. For example, if an SIB 10 includes the third network slice information supported by the radio access network device, the terminal device includes the requested SIB 10 in the first message, and sends the first message to the radio access network device, so that the radio access network device feeds back the third network slice information.

302: The radio access network device sends a second message to the terminal device.

Correspondingly, the terminal device receives the second message.

The second message includes the third network slice information.

Optionally, the first message is a radio resource control RRC system information request message, the second message is a system information message, and the system information message includes the third network slice information.

Optionally, the first message is a random access preamble message, and the second message is a system information message.

Optionally, the first message is a radio resource control RRC request message, and the second message is an RRC response message.

In this embodiment of this application, the first message or the second message may be a message existing in a current standard, and the existing message is used to implement the solution in the embodiment in FIG. 3. Alternatively, the first message or the second message may be a new message. This is not limited in this embodiment of this application.

Optionally, the terminal device may perform a registration procedure after step 302. Specifically, the terminal device needs to perform the registration procedure. For example, in a mobility registration update scenario, the terminal device performs the registration procedure; in a periodic registration update scenario, the terminal device performs the registration procedure; in an emergency registration update scenario, the terminal device performs the registration procedure. For a specific implementation process of performing the registration procedure, refer to the specific descriptions of the embodiment shown in FIG. 2. In this way, the first network slice in step 201 may be not only a network slice corresponding to a PDU session that the terminal device expects to establish, but also a network slice supported by the radio access network device.

In this embodiment of this application, the terminal device may obtain the third network slice information of the third network slice supported by the radio access network device, so that the terminal device determines, in a coverage area of a current radio access network device, a quantity or types of network slices supported by the radio access network device.

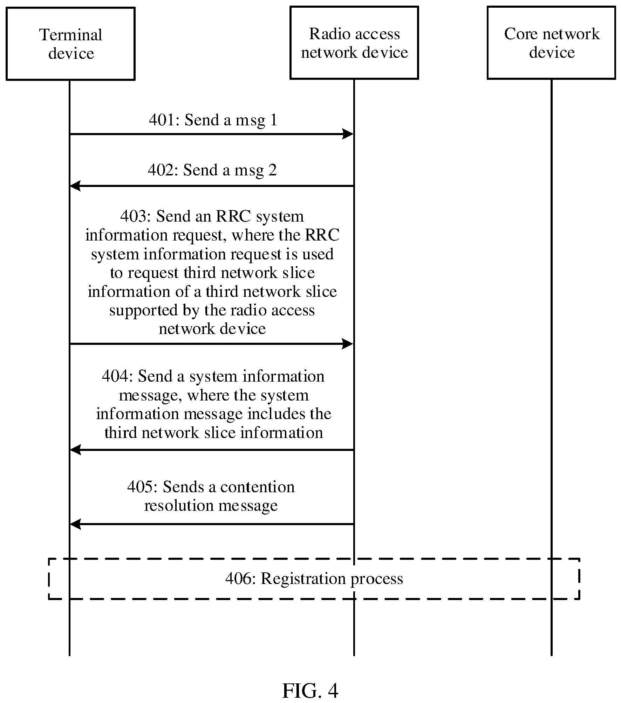

The solution in which the terminal device obtains the third network slice information in the embodiment shown in FIG. 3 may be applied to a random access procedure. For details, refer to descriptions in the embodiments shown in FIG. 4 to FIG. 6. The random access procedure in this application includes the following four steps.
1. The terminal device sends a random access preamble message to the radio access network device. The message includes a random access preamble sequence. A main purpose of sending the random access preamble sequence is to notify the radio access network device that the terminal device attempts to perform access, and enable the radio access network device to estimate a latency from the terminal device to the radio access network device. This latency estimation value is used to send, in step 2, a timing advance that is used to adjust an uplink sending time of the terminal device. A time-frequency resource occupied for sending the random access preamble sequence is referred to as a physical random access channel (physical random access channel, PRACH) resource. The radio access network device broadcasts an allowed available random access preamble sequence and a related PRACH resource through system information. The terminal device selects one random access preamble sequence and sends the random access preamble sequence on a PRACH. The random access preamble message is generally referred to as a message 1 (msg 1).
2. The radio access network device sends a random access response message to the terminal device. The message includes: (1) an index value of the random access preamble sequence detected by the radio access network device, used to indicate that this response is valid for random access of a specific terminal device; (2) a timing advance calculated through the received random access preamble sequence; (3) a scheduling indication, used to indicate a time-frequency resource used by the terminal device when the terminal device sends a message in step 3 of the random access; and (4) a temporary cell radio network temporary identifier (temporary cell radio network temporary identifier, TC-RNTI), used for further communication between the terminal device and a network side. The random access response message is generally referred to as a message 2 (msg 2).
3. The terminal device sends a scheduling transmission message to the radio access network device, and the scheduling transmission message is used to send an exact random access procedure message (which is also referred to as a payload), such as an RRC connection request, a TA update, or the like. The scheduling transmission message also includes the TC-RNTI allocated in step 2, and an initial terminal device identifier or a cell radio network temporary identifier (cell radio network temporary identifier, C-RNTI). If there is a random access preamble sequence conflict in step 1, terminal devices that have the conflict receive a same TC-RNTI in step 2. When the terminal device sends the payload, there is also a conflict on a same uplink time-frequency resource, and this causes interference. Consequently, the terminal devices that have the conflict cannot correctly perform decoding. The scheduling transmission message is generally referred to as a message 3 (msg 3).
4. The radio access network device sends a contention resolution message to the terminal device, where the message includes the initial terminal device identifier in step 3. After receiving the contention resolution message, the terminal device has three possible behaviors: (1) If the terminal device correctly decodes the contention resolution message and detects an initial terminal device identifier of the terminal device, the terminal device feeds back a positive acknowledgment to the radio access network device. (2) If the terminal device correctly decodes the contention resolution message and detects that the message includes another initial terminal device identifier, it indicates that the conflict is not resolved. In this case, the terminal device does not feed back a positive acknowledgment. (3) If the terminal device fails to decode the contention resolution message or misses a downlink grant signal, the terminal device does not feed back a positive acknowledgment. The contention resolution message is generally referred to as a message 4 (msg 4).

FIG. 4 is a possible schematic flowchart of a communication method according to an embodiment of this application. As shown in FIG. 4, the method includes step 401 to step 406.

401: A terminal device sends a msg 1 to a radio access network device.

402: The radio access network device sends a msg 2 to the terminal device.

403: The terminal device sends an RRC system information request to the radio access network device.

The RRC system information request is used to obtain third network slice information of a third network slice supported by the radio access network device. The RRC system information request may be carried in a msg 3 for sending.

404: The radio access network device sends a system information message to the terminal device.

The system information message includes the third network slice information.

For step 403 and step 404, in a possible implementation, the RRC system information request includes a requested system information block identifier. The system information block identifier may be used to indicate to obtain the third network slice information. The requested system information block identifier herein is configured or agreed on by the terminal device and the radio access network device in advance.

For example, if an SIB 10 includes network slice information supported by the radio access network device, the RRC system information request sent by the terminal device includes an identifier of the SIB 10. After receiving the RRC system information request including the SIB 10, the radio access network device sends system information SIB 10 to the terminal device, and the SIB 10 includes the third network slice information supported by the radio access network device.

For another example, the requested system information block identifier may be represented in a form of a requested-system information-list (requested-system information-List, requested-SI-List). The requested-SI-List includes at least one system information block identifier, and includes a system information block identifier used to obtain the third network slice information of the third network slice supported by the radio access network device. Therefore, the radio access network device feeds back the system information block. For example, if an SIB 10 includes network slice information supported by the radio access network device, the terminal device sets a requested-SI-List, where the requested-SI-List indicates that the terminal device needs to obtain the SIB 10. The terminal device sends the RRC system information request including the requested-SI-List to the radio access network device. Correspondingly, after receiving the RRC system information request, the radio access network device sends the system information message including the SIB 10 to the terminal device. In this way, the terminal device may obtain the third network slice information of the third network slice supported by the radio access network device.

Optionally, in addition to an SIB used to obtain the third network slice information, the requested-SI-List may further include an SIB identifier used to obtain other information. For example, the requested-SI-List may further include an SIB 2, an SIB 3, and the like.

For step 403 and step 404, in another possible implementation, an RRC system information request message includes first indication information, and the first indication information is used to obtain the third network slice information of the third network slice supported by the radio access network device. Therefore, the radio access network device feeds back the third network slice information based on the first indication information. For example, when the first indication information is "01", it indicates that the first indication information is used to obtain the third network slice information, and the terminal device sends the RRC system information request message including the first indication information to the radio access network device. Correspondingly, after receiving the RRC system information request message, the radio access network device sends the system information message including the third network slice information to the terminal device when determining that the first indication information is "01". In this way, the terminal device may obtain the third network slice information of the third network slice supported by the radio access network device.

405: The radio access network device sends a contention resolution message to the terminal device.

Optionally, a sequence of performing step 404 and step 405 is not limited in this application.

406: The terminal device performs a registration procedure.

Step 406 is an optional step. The terminal device needs to perform the registration procedure. For example, in a mobility registration update scenario, the terminal device performs the registration procedure; in a periodic registration update scenario, the terminal device performs the registration procedure; in an emergency registration update scenario, the terminal device performs the registration procedure. Optionally, for a specific implementation process of step 406, refer to the specific descriptions of the embodiment shown in FIG. 2. In this way, the first network slice in step 201 may be not only a network slice corresponding to a PDU session that the terminal device expects to establish, but also a network slice supported by the radio access network device.

In this embodiment of this application, after performing a random access procedure to establish a connection to the radio access network device, the terminal device may obtain the third network slice information of the third network slice supported by the radio access network device. In addition, the terminal device may initiate a registration procedure based on the obtained third network slice information.

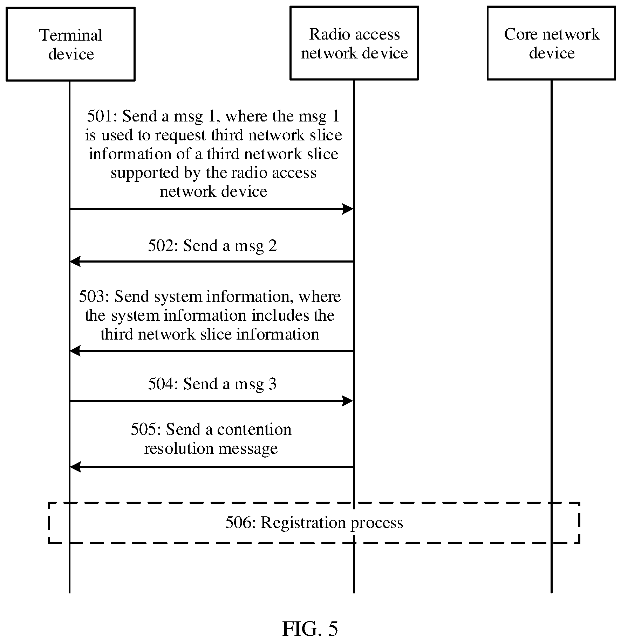

FIG. 5 is a possible schematic flowchart of another communication method according to an embodiment of this application. As shown in FIG. 5, the method includes step 501 to step 506. According to the method, a terminal device may obtain third network slice information of a third network slice supported by a radio access network device.

501: The terminal device sends a msg 1 to the radio access network device.

The msg 1 is used to obtain the third network slice information of the third network slice supported by the radio access network device.

502: The radio access network device sends a msg 2 to the terminal device.

503: The radio access network device sends a system information message to the terminal device.

The system information message includes the third network slice information.

Optionally, a sequence of performing step 502 and step 503 is not limited in this application.

For step 501 and step 503, in a possible implementation, the msg 1 includes a requested system information block identifier. The system information block identifier may be used to indicate to obtain the third network slice information. The requested system information block identifier herein is configured or agreed on by the terminal device and the radio access network device in advance.

For example, if an SIB 10 includes network slice information supported by the radio access network device, an RRC system information request sent by the terminal device includes an identifier of the SIB 10. After receiving the RRC system information request including the SIB 10, the radio access network device sends system information SIB 10 to the terminal device, and the SIB 10 includes the third network slice information supported by the radio access network device.

For another example, the requested system information block identifier may be represented in a form of a requested-SI-List. The requested-SI-List includes at least one SIB identifier, and includes an SIB identifier used to obtain the third network slice information of the third network slice supported by the radio access network device. Therefore, the radio access network device feeds back the system information block. For example, if an SIB 10 includes network slice information supported by the radio access network device, the terminal device sets a requested-SI-List, where the requested-SI-List indicates that the terminal device needs to obtain the SIB 10. The terminal device sends the msg 1 including the requested-SI-List to the radio access network device. Correspondingly, after receiving the msg 1, the radio access network device sends the system information message including the SIB 10 to the terminal device. In this way, the terminal device may obtain the third network slice information of the third network slice supported by the radio access network device.

Optionally, in addition to an SIB used to obtain the third network slice information, the requested-SI-List may further include an SIB identifier used to obtain other information. For example, the requested-SI-List may further include an SIB 2, an SIB 3, and the like.

For step 501 and step 503, in another possible implementation, the msg 1 includes second indication information, and the second indication information is used to obtain the third network slice information of the third network slice supported by the radio access network device. Therefore, the radio access network device feeds back the third network slice information based on the second indication information. For example, when the second indication information is "10", it indicates that the second indication information is used to obtain the third network slice information, and the terminal device sends the msg 1 including the second indication information to the radio access network device. Correspondingly, after receiving the msg 1, the radio access network device sends the system information message including the third network slice information to the terminal device when determining that the second indication information is "10". In this way, the terminal device may obtain the third network slice information of the third network slice supported by the radio access network device.

504: The radio access network device sends a msg 3 to the terminal device.

505: The radio access network device sends a contention resolution message to the terminal device.

Optionally, a sequence of performing step 504 and step 505 is not limited in this application.

506: The terminal device performs a registration procedure.

Step 506 is an optional step. The terminal device needs to perform the registration procedure in several cases. For example, in a mobility registration update scenario, the terminal device performs the registration procedure; in a periodic registration update scenario, the terminal device performs the registration procedure; in an emergency registration update scenario, the terminal device performs the registration procedure. Optionally, for a specific implementation process of step 506, refer to the specific descriptions of the embodiment shown in FIG. 2. In this way, the first network slice in step 201 may be not only a network slice corresponding to a PDU session that the terminal device expects to establish, but also a network slice supported by the radio access network device.

In this embodiment of this application, after performing a random access procedure to establish a connection to the radio access network device, the terminal device may obtain the third network slice information of the third network slice supported by the radio access network device. In addition, the terminal device may initiate a registration procedure based on the obtained third network slice information.

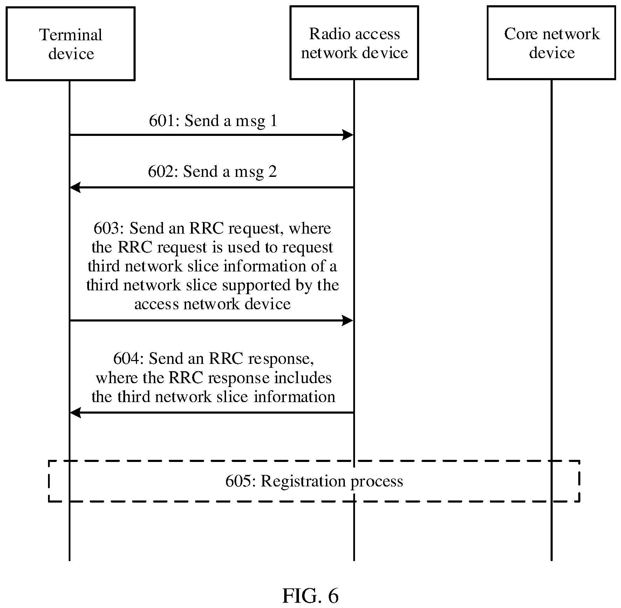

FIG. 6 is a possible schematic flowchart of another communication method according to an embodiment of this application. As shown in FIG. 6, the method includes step 601 to step 605. According to the method, a terminal device may obtain third network slice information of a third network slice supported by a radio access network device.

601: The terminal device sends a msg 1 to the radio access network device.

602: The radio access network device sends a msg 2 to the terminal device.

603: The terminal device sends an RRC request message to the radio access network device.

The RRC request message is used to obtain the third network slice information of the third network slice supported by the radio access network device. The RRC request message may be a msg 3 sent by the terminal device, so that the msg 3 may be used to obtain the third network slice information of the third network slice supported by the radio access network device.

604: The radio access network device sends an RRC response message to the terminal device.

The RRC response message includes the third network slice information. The RRC response message may be a contention resolution message sent by the radio access network device. In this way, the terminal device may obtain the third network slice information through the contention resolution message.

For step 603 and step 604, in a possible implementation, the RRC request message includes third indication information, and the third indication information is used to obtain the third network slice information of the third network slice supported by the radio access network device. Therefore, the radio access network device feeds back the third network slice information based on the third indication information. For example, when the third indication information is "11", it indicates that the third indication information is used to obtain the third network slice information, and the terminal device sends the RRC request message including the third indication information to the radio access network device. Correspondingly, after receiving the RRC request message, the radio access network device sends the RRC response message to the terminal device when determining that the third indication information is "11", and the RRC response message includes the third network slice information. In this way, the terminal device may obtain the third network slice information of the third network slice supported by the radio access network device.

Optionally, the RRC request message may be: an RRC setup request message, an RRC reestablishment request message, an RRC resume request message, or another dedicated RRC request message. Corresponding to the RRC request message, the RRC response message may be: an RRC setup message, an RRC reestablishment message, an RRC resume message, or another dedicated RRC response message.

605: The terminal device performs a registration procedure.

Step 605 is an optional step. The terminal device needs to perform the registration procedure. For example, in a mobility registration update scenario, the terminal device performs the registration procedure; in a periodic registration update scenario, the terminal device performs the registration procedure; in an emergency registration update scenario, the terminal device performs the registration procedure. Optionally, for a specific implementation process of step 605, refer to the specific descriptions of the embodiment shown in FIG. 2. In this way, the first network slice in step 201 may be not only a network slice corresponding to a PDU session that the terminal device expects to establish, but also a network slice supported by the radio access network device.

In this embodiment of this application, after performing a random access procedure to establish a connection to the radio access network device, the terminal device may obtain the third network slice information of the third network slice supported by the radio access network device. In addition, the terminal device may initiate a registration procedure based on the obtained third network slice information.

The foregoing mainly describes, from the perspective of the devices, the solutions provided in the embodiments of this application. It may be understood that, to implement the foregoing functions, the terminal device and the network device include corresponding hardware structures and/or software modules for performing the functions. With reference to the steps of each example described in the embodiments disclosed in this application, the embodiments of this application can be implemented in a form of hardware or a combination of hardware and computer software. Whether a function is performed by hardware or hardware driven by computer software depends on particular applications and design constraints of the technical solutions. A person skilled in the art may use different devices to implement the described functions for each particular application, but it should not be considered that the implementation goes beyond the scope of the technical solutions in the embodiments of this application.

In the embodiments of this application, the terminal device and the network device may be divided into functional modules or functional units based on the foregoing device examples. For example, each functional module or functional unit may be obtained through division based on each corresponding function, or two or more functions may be integrated into one processing module or processing unit. The integrated module or unit may be implemented in a form of hardware, or may be implemented in a form of a software functional module. It should be noted that, in the embodiments of this application, division into the modules or the units is an example, and is merely logical function division. During actual implementation, there may be another division manner.

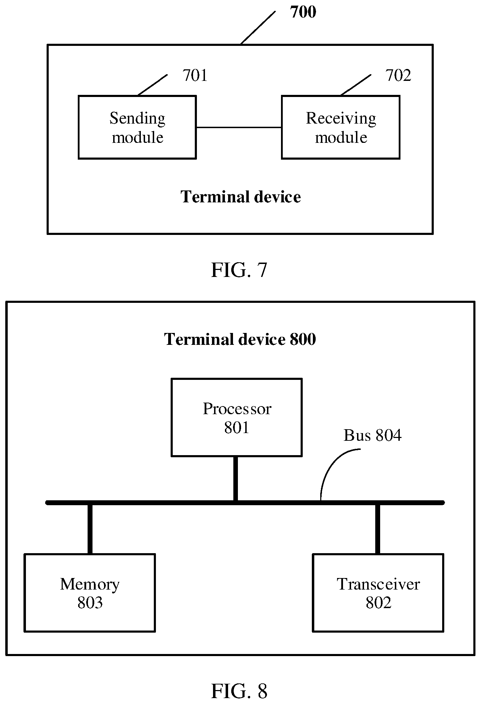

FIG. 7 is a schematic structural diagram of a terminal device according to an embodiment of this application. The terminal device 700 is configured to implement the method embodiments in FIG. 2 to FIG. 6. As shown in FIG. 7, the terminal device 700 includes a sending module 701 and a receiving module 702.

In a possible implementation, the sending module 701 is configured to send a registration request message to a core network device through a radio access network device, where the registration request message includes first network slice information, and the first network slice information is information about a first network slice corresponding to a PDU session that the terminal device expects to establish.

The receiving module 702 is configured to receive, through the radio access network device, a registration receiving message sent by the core network device, where the registration receiving message includes information about a first registration area allocated to the terminal device and second network slice information, the second network slice information is information about a second network slice that is allowed to be accessed by the terminal device in the first registration area, and
the second network slice information includes the first network slice information.

In another possible implementation, the sending module 701 is configured to send a first message to a radio access network device, where the first message is used to obtain third network slice information of a third network slice supported by the radio access network device.

The receiving module 702 is configured to receive a second message sent by the radio access network device, where the second message includes the third network slice information.

Optionally, the first message may carry indication information, the indication information is used to obtain the third network slice information of the third network slice supported by the radio access network device, and the indication information is used to indicate information obtained through the first message.

Alternatively, optionally, the first message may carry a requested system information block identifier, the requested system information block identifier is used to obtain the third network slice information, and the requested system information block identifier is used to indicate information obtained through the first message.

Optionally, the first message is a radio resource control RRC system information request message, the second message is a system information message, and the system information message includes the third network slice information.

Optionally, the first message is a random access preamble message, and the second message is a system information message.

Optionally, the first message is a radio resource control RRC request message, and the second message is an RRC response message.

It may be understood that the terminal device 700 is configured to implement the steps performed by the terminal device in the embodiments in FIG. 2 to FIG. 6. For a specific implementation of the functional modules included in the terminal device in FIG. 7 and corresponding beneficial effects, refer to the specific descriptions of the embodiments in FIG. 2 to FIG. 6. Details are not described herein.

In this embodiment of this application, the sending module 701 may be a receiver or a receiving circuit, and the receiving module 702 may be a transmitter or a sending circuit. The sending module 701 and the receiving module 702 may alternatively be communication interfaces of the terminal device.

The terminal device 700 in the embodiment shown in FIG. 7 may be implemented by a terminal device 800 shown in FIG. 8. FIG. 8 is a schematic structural diagram of another terminal device according to an embodiment of this application. The terminal device 800 shown in FIG. 8 includes a processor 801 and a transceiver 802.

The transceiver 802 is configured to support information transmission between the terminal device 800 and the radio access network device or the core network device in the foregoing embodiments.

The processor 801 is configured to control and manage an action of the terminal device.

For example, in the embodiment shown in FIG. 2, the transceiver 802 is configured to: receive the message in step 203 and send the message in step 201 in the embodiment shown in FIG. 2. For example, in the embodiments shown in FIG. 3, FIG.4, FIG. 5, and FIG. 6, the transceiver 802 is configured to: receive the message and send the message in the embodiment shown in FIG. 3. The processor 801 is configured to support the transceiver 802 in performing the foregoing steps.

The processor 801 and the transceiver 802 are in communication connection, for example, a bus 804. The bus 804 may be a PCI bus, an EISA bus, or the like. The bus 804 may be classified into an address bus, a data bus, a control bus, and the like. For ease of representation, only one thick line is used to represent the bus in FIG. 8, but this does not mean that there is only one bus or only one type of bus.

The terminal device 800 may further include a memory 803. The memory 803 is configured to store program code and data that are executed by the terminal device 800. The processor 801 is configured to execute the application program code stored in the memory 803, to implement an action of the terminal device provided in any one of the embodiments shown in FIG. 2 to FIG. 6.

It should be noted that, during actual application, the terminal device may include one or more processors, and a structure of the terminal device 800 does not constitute a limitation on this embodiment of this application.

The processor 801 may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

The transceiver 804 may be a communication interface, a transceiver circuit, or the like. The transceiver is a general term. During specific implementation, the transceiver may include a plurality of interfaces.

The memory 803 may include a volatile memory (volatile memory), for example, a random access memory (random access memory, RAM). The memory 803 may also include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 803 may further include a combination of the foregoing types of memories.

An embodiment of this application further provides a readable storage medium, and the readable storage medium may be configured to store computer software instructions used by the terminal device in the embodiments shown in FIG. 2 to FIG. 6, to implement any one of the possible implementations of the embodiments shown in FIG. 2 to FIG. 6. The storage medium includes but is not limited to a flash memory, a hard disk drive, or a solid-state drive.

An embodiment of this application further provides a computer program product. When the computer product runs on a computing device, a communication method designed for the terminal device in the foregoing embodiments may be performed.

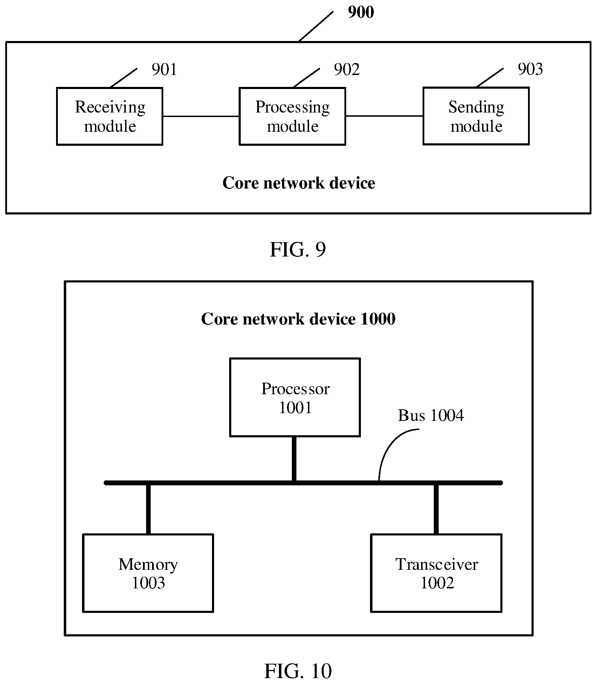

FIG. 9 is a schematic structural diagram of another core network device according to an embodiment of this application. As shown in FIG. 9, the core network device 900 includes a receiving module 901, a processing module 902, and a sending module 903.

The receiving module 901 is configured to receive, through a radio access network device, a registration request message sent by a terminal device, where the registration request message includes first network slice information, and the first network slice information is information about a first network slice corresponding to a PDU session that the terminal device expects to establish.

The processing module 902 is configured to allocate a first registration area to the terminal device based on the registration request message, where the first registration area supports at least a second network slice, and the second network slice is a network slice that is allowed to be accessed by the terminal device in the first registration area.

The sending module 903 is configured to send a registration receiving message to the terminal device through the radio access network device, where the registration receiving message includes information about the first registration area and second network slice information of the second network slice, and
the second network slice information includes the first network slice information.

It may be understood that the core network device 900 is configured to implement the steps performed by the core network device in the embodiments in FIG. 2 to FIG. 6. For a specific implementation of the functional modules included in the core network device in FIG. 9 and corresponding beneficial effects, refer to the specific descriptions of the embodiments in FIG. 2 to FIG. 6. Details are not described herein.

In this embodiment of this application, the receiving module 901 may be a receiver or a receiving circuit, and the sending module 903 may be a transmitter or a sending circuit. The receiving module 901 and the sending module 903 may alternatively be communication interfaces of the core network device. The processing module 902 may be a processor.

The core network device 900 shown in FIG. 9 may be implemented by a core network device 1000 shown in FIG. 10. FIG. 10 is a schematic structural diagram of another core network device according to an embodiment of this application. The core network device 1000 shown in FIG. 10 includes a processor 1001 and a transceiver 1002.

The transceiver 1002 is configured to support information transmission between the core network device 1000 and the terminal device in the foregoing embodiments, and the processor 1001 is configured to control and manage an action of the core network device 1000.

For example, in the embodiment shown in FIG. 2, the transceiver 1002 is configured to: send the message in step 203 and receive the message in step 201 in the embodiment shown in FIG. 2. The processing unit 1001 is configured to implement step 202.

The processor 1001 and the transceiver 1002 are in communication connection, for example, a bus. The core network device 1000 may further include a memory 1003. The memory 1003 is configured to store program code and data that are executed by the core network device 1000. The processor 1001 is configured to execute the application program code stored in the memory 1003, to implement an action of the core network device provided in any one of the embodiments shown in FIG. 2 to FIG. 6.

It should be noted that, during actual application, the core network device may include one or more processors, and a structure of the core network device 1000 does not constitute a limitation on this embodiment of this application.

The processor 1001 may be a CPU, an NP, a hardware chip, or any combination thereof. The hardware chip may be an ASIC, a PLD, or a combination thereof. The PLD may be a CPLD, an FPGA, a GAL, or any combination thereof.

The memory 1003 may include a volatile memory, for example, a RAM. The memory 1003 may also include a non-volatile memory, for example, a ROM, a flash memory, a hard disk drive, or a solid-state drive. The memory 1003 may further include a combination of the foregoing types of memories.

An embodiment of this application further provides a readable storage medium, and the readable storage medium may be configured to store computer software instructions used by the core network device in the embodiments shown in FIG. 2 to FIG. 6, to implement any one of the possible implementations of the embodiments shown in FIG. 2 to FIG. 6. The storage medium includes but is not limited to a flash memory, a hard disk drive, or a solid-state drive.

An embodiment of this application further provides a computer program product. When the computer product runs on a computing device, a communication method designed for the core network device in the foregoing embodiments may be performed.

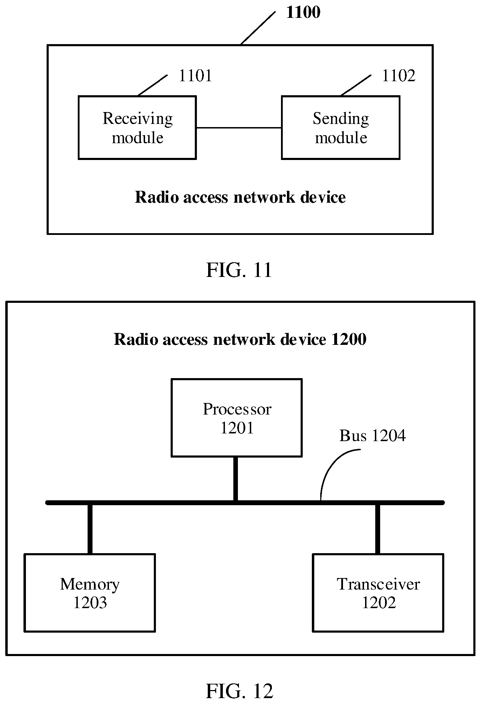

FIG. 11 is a schematic structural diagram of another radio access network device according to an embodiment of this application. As shown in FIG. 11, the radio access network device 1100 includes a receiving module 1101 and a sending module 1102.

The receiving module 1101 is configured to receive a first message sent by a terminal device, where the first message is used to obtain third network slice information of a third network slice supported by the radio access network device.

The sending module 1102 is configured to send a second message to the terminal device, where the second message includes the third network slice information.

Optionally, the first message may carry indication information, the indication information is used to obtain the third network slice information of the third network slice supported by the radio access network device, and the indication information is used to indicate information obtained through the first message.

Alternatively, optionally, the first message may carry a requested system information block identifier, the requested system information block identifier is used to obtain the third network slice information, and the requested system information block identifier is used to indicate information obtained through the first message.

Optionally, the first message is a radio resource control RRC system information request message, the second message is a system information message, and the system information message includes the third network slice information.

Optionally, the first message is a random access preamble message, and the second message is a system information message.

Optionally, the first message is a radio resource control RRC request message, and the second message is an RRC response message.

It may be understood that the radio access network device 1100 is configured to implement the steps performed by the radio access network device in the embodiments in FIG. 2 to FIG. 6. For a specific implementation of the functional modules included in the radio access network device in FIG. 11 and corresponding beneficial effects, refer to the specific descriptions of the embodiments in FIG. 2 to FIG. 6. Details are not described herein.

In this embodiment of this application, the receiving module 1101 may be a receiver or a receiving circuit, and the sending module 1102 may be a transmitter or a sending circuit. The receiving module 1101 and the sending module 1102 may alternatively be communication interfaces of the radio access network device.

The radio access network device 1100 shown in FIG. 11 may be implemented by a radio access network device 1200 shown in FIG. 12. FIG. 12 is a schematic structural diagram of another radio access network device according to an embodiment of this application. The radio access network device 1200 shown in FIG. 12 includes a processor 1201 and a transceiver 1202.

The transceiver 1202 is configured to support information transmission between the radio access network device 1200 and the terminal device in the foregoing embodiments, and the processor 1201 is configured to control and manage an action of the radio access network device 1200.

For example, in the embodiments shown in FIG. 3, FIG.4, FIG. 5, and FIG. 6, the transceiver 1202 is configured to: receive the message and send the message in the embodiment shown in FIG. 3. The processing unit 1201 is configured to support the transceiver 1202 in performing the foregoing steps.

The processor 1201 and the transceiver 1202 are in communication connection, for example, a bus. The radio access network device 1200 may further include a memory 1203. The memory 1203 is configured to store program code and data that are executed by the radio access network device 1200. The processor 1201 is configured to execute the application program code stored in the memory 1203, to implement an action of the radio access network device provided in any one of the embodiments shown in FIG. 2 to FIG. 6.

It should be noted that, during actual application, the radio access network device may include one or more processors, and a structure of the radio access network device 1200 does not constitute a limitation on this embodiment of this application.

The processor 1201 may be a CPU, an NP, a hardware chip, or any combination thereof. The hardware chip may be an ASIC, a PLD, or a combination thereof. The PLD may be a CPLD, an FPGA, a GAL, or any combination thereof.

The memory 1203 may include a volatile memory, for example, a RAM. The memory 1203 may also include a non-volatile memory, for example, a ROM, a flash memory, a hard disk drive, or a solid-state drive. The memory 1203 may further include a combination of the foregoing types of memories.

An embodiment of this application further provides a readable storage medium, and the readable storage medium may be configured to store computer software instructions used by the radio access network device in the embodiments shown in FIG. 2 to FIG. 6, to implement any one of the possible implementations of the embodiments shown in FIG. 2 to FIG. 6. The storage medium includes but is not limited to a flash memory, a hard disk drive, or a solid-state drive.

An embodiment of this application further provides a computer program product. When the computer product runs on a computing device, a communication method designed for the radio access network device in the foregoing embodiments may be performed.

In the specification, claims, and accompanying drawings of this application, the terms "first", "second", "third", "fourth", and the like are intended to distinguish between different objects but do not indicate a particular order. In addition, the terms "including", "having", and any other variant thereof are intended to cover non-exclusive inclusion. For example, a process, method, system, product, or device that includes a series of steps or units is not limited to the listed steps or units, but optionally further includes an unlisted step or unit, or optionally further includes another inherent step or unit of the process, method, product, or device.

In this application, "A and/or B" refers to one of the following cases: A, B, and A and B. "At least one of" refers to the listed items or any combination of any quantity of the listed items. For example, "at least one of A, B, and C" refers to one of the following cases: any one of the seven cases: A, B, C, A and B, B and C, A and C, and A, B, and C.

A person of ordinary skill in the art may understand that sequence numbers of the foregoing processes do not mean execution sequences in various embodiments of this application. The execution sequences of the processes should be determined based on functions and internal logic of the processes, and should not constitute any limitation on the implementation processes of the embodiments of this application.

All or some of the foregoing embodiments may be implemented by using software, hardware, firmware, or any combination thereof. When the embodiments are implemented by using the software, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive Solid State Disk (SSD)), or the like.

A person of ordinary skill in the art may understand that all or some of the processes of the methods in the embodiments may be completed by a computer program instructing relevant hardware. The program may be stored in a computer-readable storage medium. When the program is executed, the processes of the methods in the embodiments may be included.

## Claims

1. A communication method for a terminal device, comprising:
sending (201), a registration request message to a core network device through a radio access network device, wherein the registration request message comprises first network slice information, and the first network slice information is information about a first network slice corresponding to a protocol data unit, PDU, session that the terminal device expects to establish; and
receiving (203), through the radio access network device, a registration accept message sent by the core network device, wherein the registration accept message comprises information about a first registration area allocated to the terminal device and second network slice information, the second network slice information is information about a second network slice that is allowed to be used by the terminal device in the first registration area, wherein the first registration area allocated to the terminal device comprises at least one tracking area, and each of the at least one tracking area supports the first network slice and
the second network slice information comprises the first network slice information.

2. The method according to claim 1, wherein the registration request message further comprises slice availability information, and the slice availability information comprises information about whether the first network slice is available in a tracking area comprised in a historically allocated second registration area.

3. The method according to claim 1 or 2, wherein the first network slice is a network slice that corresponds to the PDU session that the terminal device expects to establish and that is supported by the radio access network device.

4. The method according to claim 3, wherein before the sending, a registration request message to a core network device, the method further comprises:
sending (301), a first message to the radio access network device, wherein the first message is used to obtain third network slice information of a third network slice supported by the radio access network device; and
receiving (302), a second message sent by the radio access network device, wherein the second message comprises the third network slice information.

5. A communication method for a core network device, comprising:
receiving (201), through a radio access network device, a registration request message sent by a terminal device, wherein the registration request message comprises first network slice information, and the first network slice information is information about a first network slice corresponding to a protocol data unit, PDU, session that the terminal device expects to establish;
allocating (202), a first registration area to the terminal device based on the registration request message, wherein the first registration area supports at least a second network slice, and the second network slice is a network slice that is allowed to be used by the terminal device in the first registration area, wherein the first registration area comprises at least one tracking area, and each of the at least one tracking area supports the first network slice; and
sending (203), a registration accept message to the terminal device through the radio access network device, wherein the registration accept message comprises information about the first registration area and second network slice information of the second network slice, and
the second network slice information comprises the first network slice information.

6. The method according to claim 5, wherein the at least one tracking area of the first registration area is determined based on a network slice supported by each of a plurality of tracking areas and the first network slice information.

7. The method according to claim 5, wherein the registration request message further comprises slice availability information, and the slice availability information comprises information about whether the first network slice is available in a tracking area comprised in a historically allocated second registration area.

8. An apparatus for a terminal device (700), comprising:
a sending module (701), configured to send a registration request message to a core network device through a radio access network device, wherein the registration request message comprises first network slice information, and the first network slice information is information about a first network slice corresponding to a protocol data unit, PDU, session that the terminal device expects to establish; and
a receiving module (702), configured to receive, through the radio access network device, a registration receiving message sent by the core network device, wherein the registration accept message comprises information about a first registration area allocated to the terminal device and second network slice information, the second network slice information is information about a second network slice that is allowed to be used by the terminal device in the first registration area, wherein the first registration area comprises at least one tracking area, and each of the at least one tracking area supports the first network slice, and
the second network slice information comprises the first network slice information.

9. The apparatus according to claim 8, wherein the registration request message further comprises slice availability information, and the slice availability information comprises information about whether the first network slice is available in a tracking area comprised in a historically allocated second registration area.

10. The apparatus according to claim 8 or 9, wherein the first network slice is a network slice that corresponds to the PDU session that the terminal device expects to establish and that is supported by the radio access network device.

11. The apparatus according to claim 10, wherein before the sending module sends the registration request message to the core network device,
the sending module is further configured to send a first message to the radio access network device, wherein the first message is used to obtain third network slice information of a third network slice supported by the radio access network device; and
the receiving module is further configured to receive a second message sent by the radio access network device, wherein the second message comprises the third network slice information.

12. An apparatus for a core network device (900), comprising:
a receiving module (901), configured to receive a registration request message sent by a terminal device, wherein the registration request message comprises first network slice information, and the first network slice information is information about a first network slice corresponding to a protocol data unit, PDU, session that the terminal device expects to establish;
a processing module (902), configured to allocate a first registration area to the terminal device based on the registration request message, wherein the first registration area supports at least a second network slice, and the second network slice is a network slice that is allowed to be used by the terminal device in the first registration area; and
a sending module (903), configured to send a registration accept message to the terminal device, wherein the registration accept message comprises information about the first registration area and second network slice information of the second network slice, wherein the first registration area comprises at least one tracking area, and each of the at least one tracking area supports the first network slice, and
the second network slice information comprises the first network slice information.

13. The apparatus according to claim 12, wherein the at least one tracking area of the first registration area is determined based on a network slice supported by each of a plurality of tracking areas and the first network slice information.

14. The apparatus according to claim 12, wherein the registration request message further comprises slice availability information, and the slice availability information comprises information about whether the first network slice is available in a tracking area comprised in a historically allocated second registration area.

15. A readable storage medium, wherein the readable storage medium is configured to store instructions, to implement the method according to any one of claims 1 to 4 when embodied in a terminal device, or the method according to any of the claims 5 to 7 when embodied in a core network device.

## Patentansprüche

1. Kommunikationsverfahren für ein Endgerät, umfassend:
Senden (201) einer Registrierungsanforderungsnachricht an eine Kernnetzwerkvorrichtung über eine Funkzugriffsnetzwerkvorrichtung, wobei die Registrierungsanforderungsnachricht erste Netzwerkscheibeninformationen umfasst und die ersten Netzwerkscheibeninformationen Informationen über eine erste Netzwerkscheibe sind, die einer Protokolldateneinheitssitzung, PDU-Sitzung, entspricht, die das Endgerät erwartet, aufzubauen; und
Empfangen (203), über die Funkzugriffsnetzwerkvorrichtung, einer Registrierungsentgegennahmenachricht, die durch die Kernnetzwerkvorrichtung gesandt wird, wobei die Registrierungsentgegennahmenachricht Informationen über einen ersten Registrierungsbereich, der dem Endgerät zugeordnet ist, und zweite Netzwerkscheibeninformationen umfasst, wobei die zweiten Netzwerkscheibeninformationen Informationen über eine zweite Netzwerkscheibe sind, der erlaubt ist, durch das Endgerät in dem ersten Registrierungsbereich verwendet zu werden, wobei der erste Registrierungsbereich, der dem Endgerät zugeordnet ist, mindestens einen Tracking-Bereich umfasst und jeder des mindestens einen Tracking-Bereichs die erste Netzwerkscheibe unterstützt, und
die zweiten Netzwerkscheibeninformationen die ersten Netzwerkscheibeninformationen umfassen.

2. Verfahren nach Anspruch 1, wobei die Registrierungsanforderungsnachricht ferner Scheibenverfügbarkeitsinformationen umfasst und die Scheibenverfügbarkeitsinformationen Informationen darüber umfassen, ob die erste Netzwerkscheibe in einem Tracking-Bereich verfügbar ist, der von einem historisch zugeordneten zweiten Registrierungsbereich umfasst wird.

3. Verfahren nach Anspruch 1 oder 2, wobei die erste Netzwerkscheibe eine Netzwerkscheibe ist, die der PDU-Sitzung entspricht, die das Endgerät erwartet, aufzubauen, und die durch die Funkzugriffsnetzwerkvorrichtung unterstützt wird.

4. Verfahren nach Anspruch 3, wobei vor dem Senden einer Registrierungsanforderungsnachricht an eine Kernnetzwerkvorrichtung das Verfahren ferner Folgendes umfasst:
Senden (301) einer ersten Nachricht an die Funkzugriffsnetzwerkvorrichtung, wobei die erste Nachricht dazu verwendet wird, dritte Netzwerkscheibeninformationen einer dritten Netzwerkscheibe, die durch die Funkzugriffsnetzwerkvorrichtung unterstützt wird, zu erlangen; und
Empfangen (302) einer zweiten Nachricht, die durch die Funkzugriffsnetzwerkvorrichtung gesandt wird, wobei die zweite Nachricht die dritten Netzwerkscheibeninformationen umfasst.

5. Kommunikationsverfahren für eine Kernnetzwerkvorrichtung, umfassend:
Empfangen (201), durch eine Funkzugriffsnetzwerkvorrichtung, einer Registrierungsanforderungsnachricht, die durch ein Endgerät gesandt wird, wobei die Registrierungsanforderungsnachricht erste Netzwerkscheibeninformationen umfasst und die ersten Netzwerkscheibeninformationen Informationen über eine erste Netzwerkscheibe sind, die einer Protokolldateneinheitssitzung, PDU-Sitzung, entspricht, die das Endgerät erwartet, aufzubauen;
Zuordnen (202) eines ersten Registrierungsbereichs zu dem Endgerät basierend auf der Registrierungsanforderungsnachricht,
wobei der erste Registrierungsbereich mindestens eine zweite Netzwerkscheibe unterstützt und die zweite Netzwerkscheibe eine Netzwerkscheibe ist, der erlaubt ist, durch das Endgerät in dem ersten Registrierungsbereich verwendet zu werden, wobei der erste Registrierungsbereich mindestens einen Tracking-Bereich umfasst und jeder des mindestens einen Tracking-Bereichs die erste Netzwerkscheibe unterstützt; und
Senden (203) einer Registrierungsentgegennahmenachricht an das Endgerät durch die Funkzugriffsnetzwerkvorrichtung, wobei die Registrierungsentgegennahmenachricht Informationen über den ersten Registrierungsbereich und zweite Netzwerkscheibeninformationen der zweiten Netzwerkscheibe umfasst, und
die zweiten Netzwerkscheibeninformationen die ersten Netzwerkscheibeninformationen umfassen.

6. Verfahren nach Anspruch 5, wobei der mindestens eine Tracking-Bereich des ersten Registrierungsbereichs basierend auf einer Netzwerkscheibe, die durch jeden einer Vielzahl von Tracking-Bereichen unterstützt wird, und den ersten Netzwerkscheibeninformationen bestimmt wird.

7. Verfahren nach Anspruch 5, wobei die Registrierungsanforderungsnachricht ferner Scheibenverfügbarkeitsinformationen umfasst und die Scheibenverfügbarkeitsinformationen Informationen darüber umfassen, ob die erste Netzwerkscheibe in einem Tracking-Bereich verfügbar ist, der von einem historisch zugeordneten zweiten Registrierungsbereich umfasst wird.

8. Einrichtung für ein Endgerät (700), umfassend:
ein Sendemodul (701), das dazu konfiguriert ist, eine Registrierungsanforderungsnachricht an eine Kernnetzwerkvorrichtung über eine Funkzugriffsnetzwerkvorrichtung zu senden, wobei die Registrierungsanforderungsnachricht erste Netzwerkscheibeninformationen umfasst und die ersten Netzwerkscheibeninformationen Informationen über eine erste Netzwerkscheibe sind, die einer Protokolldateneinheitssitzung, PDU-Sitzung, entspricht, die das Endgerät erwartet, aufzubauen; und
ein Empfangsmodul (702), das dazu konfiguriert ist, durch die Funkzugriffsnetzwerkvorrichtung eine Registrierungsempfangsnachricht, die durch die Kernnetzwerkvorrichtung gesandt wird, zu empfangen, wobei die Registrierungsentgegennahmenachricht Informationen über einen ersten Registrierungsbereich, der dem Endgerät zugeordnet ist,
und zweite Netzwerkscheibeninformationen umfasst, wobei die zweiten Netzwerkscheibeninformationen Informationen über eine zweite Netzwerkscheibe sind, der erlaubt ist, durch das Endgerät in dem ersten Registrierungsbereich verwendet zu werden, wobei der erste Registrierungsbereich mindestens einen Tracking-Bereich umfasst und jeder des mindestens einen Tracking-Bereichs die erste Netzwerkscheibe unterstützt, und
die zweiten Netzwerkscheibeninformationen die ersten Netzwerkscheibeninformationen umfassen.

9. Einrichtung nach Anspruch 8, wobei die Registrierungsanforderungsnachricht ferner Scheibenverfügbarkeitsinformationen umfasst und die Scheibenverfügbarkeitsinformationen Informationen darüber umfassen, ob die erste Netzwerkscheibe in einem Tracking-Bereich verfügbar ist, der von einem historisch zugeordneten zweiten Registrierungsbereich umfasst wird.

10. Einrichtung nach Anspruch 8 oder 9, wobei die erste Netzwerkscheibe eine Netzwerkscheibe ist, die der PDU-Sitzung entspricht, die das Endgerät erwartet, aufzubauen, und die durch die Funkzugriffsnetzwerkvorrichtung unterstützt wird.

11. Einrichtung nach Anspruch 10, wobei, bevor das Sendemodul die Registrierungsanforderungsnachricht an die Kernnetzwerkvorrichtung sendet,
das Sendemodul ferner dazu konfiguriert ist, eine erste Nachricht an die Funkzugriffsnetzwerkvorrichtung zu senden, wobei die erste Nachricht dazu verwendet wird, dritte Netzwerkscheibeninformationen einer dritten Netzwerkscheibe, die durch die Funkzugriffsnetzwerkvorrichtung unterstützt wird, zu erlangen; und
das Empfangsmodul ferner dazu konfiguriert ist, eine zweite Nachricht, die durch die Funkzugriffsnetzwerkvorrichtung gesandt wird, zu empfangen, wobei die zweite Nachricht die dritten Netzwerkscheibeninformationen umfasst.

12. Einrichtung für eine Kernnetzwerkvorrichtung (900), umfassend:
ein Empfangsmodul (901), das dazu konfiguriert ist, eine Registrierungsanforderungsnachricht, die durch ein Endgerät gesandt wird, zu empfangen, wobei die Registrierungsanforderungsnachricht erste Netzwerkscheibeninformationen umfasst und die ersten Netzwerkscheibeninformationen Informationen über eine erste Netzwerkscheibe sind, die einer Protokolldateneinheitssitzung, PDU-Sitzung, entspricht, die das Endgerät erwartet, aufzubauen;
ein Verarbeitungsmodul (902), das dazu konfiguriert ist, dem Endgerät basierend auf der Registrierungsanforderungsnachricht einen ersten Registrierungsbereich zuzuordnen, wobei der erste Registrierungsbereich mindestens eine zweite Netzwerkscheibe unterstützt und die zweite Netzwerkscheibe eine Netzwerkscheibe ist, der erlaubt ist, durch das Endgerät in dem ersten Registrierungsbereich verwendet zu werden; und
ein Sendemodul (903), das dazu konfiguriert ist, eine Registrierungsentgegennahmenachricht an das Endgerät zu senden, wobei die Registrierungsentgegennahmenachricht Informationen über den ersten Registrierungsbereich und zweite Netzwerkscheibeninformationen der zweiten Netzwerkscheibe umfasst, wobei der erste Registrierungsbereich mindestens einen Tracking-Bereich umfasst und jeder des mindestens einen Tracking-Bereichs die erste Netzwerkscheibe unterstützt, und
die zweiten Netzwerkscheibeninformationen die ersten Netzwerkscheibeninformationen umfassen.

13. Einrichtung nach Anspruch 12, wobei der mindestens eine Tracking-Bereich des ersten Registrierungsbereichs basierend auf einer Netzwerkscheibe, die durch jeden einer Vielzahl von Tracking-Bereichen unterstützt wird, und den ersten Netzwerkscheibeninformationen bestimmt wird.

14. Einrichtung nach Anspruch 12, wobei die Registrierungsanforderungsnachricht ferner Scheibenverfügbarkeitsinformationen umfasst und die Scheibenverfügbarkeitsinformationen Informationen darüber umfassen, ob die erste Netzwerkscheibe in einem Tracking-Bereich verfügbar ist, der von einem historisch zugeordneten zweiten Registrierungsbereich umfasst wird.

15. Lesbares Speichermedium, wobei das lesbare Speichermedium dazu konfiguriert ist, Anweisungen zu speichern, um das Verfahren nach einem der Ansprüche 1 bis 4, wenn es in einem Endgerät ausgeführt ist, oder das Verfahren nach einem der Ansprüche 5 bis 7, wenn es in einer Kernnetzwerkvorrichtung ausgeführt ist, umzusetzen.

## Revendications

1. Procédé de communication pour un dispositif terminal, comprenant :
l'envoi (201) d'un message de demande d'enregistrement à un dispositif de réseau central via un dispositif de réseau d'accès radio, dans lequel le message de demande d'enregistrement comprend des premières informations de tranche de réseau, et les premières informations de tranche de réseau sont des informations concernant une première tranche de réseau correspondant à une session d'unité de données de protocole, PDU, que le dispositif terminal prévoit d'établir ; et
la réception (203) via le dispositif de réseau d'accès radio, d'un message d'acceptation d'enregistrement envoyé par le dispositif de réseau central, dans lequel le message d'acceptation d'enregistrement comprend des informations concernant une première zone d'enregistrement attribuée au dispositif terminal et des deuxièmes informations de tranche de réseau, les deuxièmes informations de tranche de réseau sont des informations concernant une deuxième tranche de réseau qui est autorisée à être utilisée par le dispositif terminal dans la première zone d'enregistrement, dans lequel la première zone d'enregistrement attribuée au dispositif terminal comprend au moins une zone de suivi, et chacune des au moins une zone de suivi prend en charge la première tranche de réseau et
les deuxièmes informations de tranche de réseau comprennent les premières informations de tranche de réseau.

2. Procédé selon la revendication 1, dans lequel le message de demande d'enregistrement comprend également des informations de disponibilité de tranche, et les informations de disponibilité de tranche comprennent des informations indiquant si la première tranche de réseau est disponible dans une zone de suivi comprise dans une seconde zone d'enregistrement historiquement attribuée.

3. Procédé selon la revendication 1 ou 2, dans lequel la première tranche de réseau est une tranche de réseau qui correspond à la session PDU que le dispositif terminal prévoit d'établir et qui est prise en charge par le dispositif de réseau d'accès radio.

4. Procédé selon la revendication 3, dans lequel avant l'envoi d'un message de demande d'enregistrement à un dispositif de réseau central, le procédé comprend également :
l'envoi (301) d'un premier message au dispositif de réseau d'accès radio, dans lequel le premier message est utilisé pour obtenir des troisièmes informations de tranche de réseau d'une troisième tranche de réseau prise en charge par le dispositif de réseau d'accès radio ; et
la réception (302) d'un second message envoyé par le dispositif de réseau d'accès radio, dans lequel le second message comprend des troisièmes informations de tranche de réseau.

5. Procédé de communication pour un dispositif de réseau central, comprenant :
la réception (201) via un dispositif de réseau d'accès radio,
d'un message de demande d'enregistrement envoyé par un dispositif terminal, dans lequel le message de demande d'enregistrement comprend des premières informations de tranche de réseau, et les premières informations de tranche de réseau sont des informations concernant une première tranche de réseau correspondant à une session d'unité de données de protocole, PDU, que le dispositif terminal prévoit d'établir ;
l'attribution (202) d'une première zone d'enregistrement au dispositif terminal sur la base du message de demande d'enregistrement, dans lequel la première zone d'enregistrement prend en charge au moins une deuxième tranche de réseau, et la deuxième tranche de réseau est une tranche de réseau qui est autorisée à être utilisée par le dispositif terminal dans la première zone d'enregistrement, dans lequel la première zone d'enregistrement comprend au moins une zone de suivi, et chacune de l'au moins une zone de suivi prend en charge la première tranche de réseau ; et
l'envoi (203) d'un message d'acceptation d'enregistrement au dispositif terminal via le dispositif de réseau d'accès radio,
dans lequel le message d'acceptation d'enregistrement comprend des informations concernant la première zone d'enregistrement et des deuxièmes informations de tranche de réseau de la deuxième tranche de réseau, et
les deuxièmes informations de tranche de réseau comprennent les premières informations de tranche de réseau.

6. Procédé selon la revendication 5, dans lequel l'au moins une zone de suivi de la première zone d'enregistrement est déterminée sur la base d'une tranche de réseau prise en charge par chacune d'une pluralité de zones de suivi et des premières informations de tranche de réseau.

7. Procédé selon la revendication 5, dans lequel le message de demande d'enregistrement comprend également des informations de disponibilité de tranche, et les informations de disponibilité de tranche comprennent des informations indiquant si la première tranche de réseau est disponible dans une zone de suivi comprise dans une seconde zone d'enregistrement historiquement attribuée.

8. Appareil pour un dispositif terminal (700), comprenant :
un module d'envoi (701), configuré pour envoyer un message de demande d'enregistrement à un dispositif de réseau central via un dispositif de réseau d'accès radio, dans lequel le message de demande d'enregistrement comprend des premières informations de tranche de réseau, et les premières informations de tranche de réseau sont des informations concernant une première tranche de réseau correspondant à une session d'unité de données de protocole, PDU, que le dispositif terminal prévoit d'établir ; et
un module de réception (702), configuré pour recevoir, via le dispositif de réseau d'accès radio, un message de réception d'enregistrement envoyé par le dispositif de réseau central,
dans lequel le message d'acceptation d'enregistrement comprend des informations concernant une première zone d'enregistrement attribuée au dispositif terminal et des deuxièmes informations de tranche de réseau, les deuxièmes informations de tranche de réseau sont des informations concernant une deuxième tranche de réseau qui est autorisée à être utilisée par le dispositif terminal dans la première zone d'enregistrement, dans lequel la première zone d'enregistrement comprend au moins une zone de suivi, et chacune de l'au moins une zone de suivi prend en charge la première tranche de réseau, et
les deuxièmes informations de tranche de réseau comprennent les premières informations de tranche de réseau.

9. Appareil selon la revendication 8, dans lequel le message de demande d'enregistrement comprend également des informations de disponibilité de tranche, et les informations de disponibilité de tranche comprennent des informations indiquant si la première tranche de réseau est disponible dans une zone de suivi comprise dans une seconde zone d'enregistrement historiquement attribuée.

10. Appareil selon la revendication 8 ou 9, dans lequel la première tranche de réseau est une tranche de réseau qui correspond à la session PDU que le dispositif terminal prévoit d'établir et qui est prise en charge par le dispositif de réseau d'accès radio.

11. Appareil selon la revendication 10, dans lequel avant que le module d'envoi n'envoie le message de demande d'enregistrement au dispositif de réseau central,
le module d'envoi est également configuré pour envoyer un premier message au dispositif de réseau d'accès radio, dans lequel le premier message est utilisé pour obtenir des troisièmes informations de tranche de réseau d'une troisième tranche de réseau prise en charge par le dispositif de réseau d'accès radio ; et
le module de réception est également configuré pour recevoir un second message envoyé par le dispositif de réseau d'accès radio, dans lequel le second message comprend les troisièmes informations de tranche de réseau.

12. Appareil pour un dispositif de réseau central (900), comprenant :
un module de réception (901), configuré pour recevoir un message de demande d'enregistrement envoyé par un dispositif terminal,
dans lequel le message de demande d'enregistrement comprend des premières informations de tranche de réseau, et les premières informations de tranche de réseau sont des informations concernant une première tranche de réseau correspondant à une session d'unité de données de protocole, PDU, que le dispositif terminal prévoit d'établir ;
un module de traitement (902), configuré pour attribuer une première zone d'enregistrement au dispositif terminal sur la base du message de demande d'enregistrement, dans lequel la première zone d'enregistrement prend en charge au moins une deuxième tranche de réseau, et la deuxième tranche de réseau est une tranche de réseau qui est autorisée à être utilisée par le dispositif terminal dans la première zone d'enregistrement ; et
un module d'envoi (903), configuré pour envoyer un message d'acceptation d'enregistrement au dispositif terminal, dans lequel le message d'acceptation d'enregistrement comprend des informations concernant la première zone d'enregistrement et des deuxièmes informations de tranche de réseau de la deuxième tranche de réseau, dans lequel la première zone d'enregistrement comprend au moins une zone de suivi, et chacune de l'au moins une zone de suivi prend en charge la première tranche de réseau, et
les deuxièmes informations de tranche de réseau comprennent les premières informations de tranche de réseau.

13. Appareil selon la revendication 12, dans lequel l'au moins une zone de suivi de la première zone d'enregistrement est déterminée sur la base d'une tranche de réseau prise en charge par chacune d'une pluralité de zones de suivi et des premières informations de tranche de réseau.

14. Appareil selon la revendication 12, dans lequel le message de demande d'enregistrement comprend également des informations de disponibilité de tranche, et les informations de disponibilité de tranche comprennent des informations indiquant si la première tranche de réseau est disponible dans une zone de suivi comprise dans une seconde zone d'enregistrement historiquement attribuée.

15. Support de stockage lisible, dans lequel le support de stockage lisible est configuré pour stocker des instructions, afin de mettre en oeuvre le procédé selon l'une quelconque des revendications 1 à 4 lorsqu'il est incorporé dans un dispositif terminal, ou le procédé selon l'une quelconque des revendications 5 à 7 lorsqu'il est incorporé dans un dispositif de réseau central.
